# EUROPEAN PATENT APPLICATION

(11) **EP 0 713 182 A1**
(43) Date of publication of application: **22.05.1996**
(21) Application number: 95610057.2
(22) Date of filing: 17.11.1995
(51) Int. Cl.: G06F 13/38

(54) **A method for the presentation of information and a system for the transfer and presentation of information**

(30) Priority: 18.11.1994 DK 1323/94
(71) Applicant: KOMMUNEDATA I/S, DK-1601 Copenhagen V (DK)
(72) Inventor: Brinck, Poul Jörgen, DK-3070 Snekkersten (DK); Lyngsö, Poul, DK-2680 Solröd (DK); Ilsöe, Lars, DK-1208 Köbenhavn V (DK)
(74) Representative: Plougmann, Vingtoft & Partners A/S

(57) **Abstract**

A method for the presentation of information in a presentation system, said method comprising transfer of data from a data processing system to the presentation system, said data being transferred as data strings comprising at least one data element, wherein each data element comprising at least one identifier unambiguously represents information. One or more presentation parameters or attributes are identified in the presentation system by means of at least one identifier in a data element, and the presentation of the information of the data element is controlled in the presentation system by means of the identified presentation parameter(s) or attribute(s). The presentation parameters or attributes are preferably identified on the basis of a number of presentation parameters or attributes comprising at least one static and at least one dynamic presentation parameter or attribute. The invention also relates to a system for the transfer and presentation of information according the method, said system comprising a presentation system and a data processing system in which one or more tables indicating the connection between the presentation parameters or the attributes and identifiers are associated with the presentation system. In a preferred embodiment, the presentation system and the data processing system are the client and the server, respectively, in a client-server system. Furthermore, it is preferred that the system also comprises a communication module constituting an interface between the client and the server.

## Description

The present invention relates to a method for the presentation of information in a presentation system, data being transferred from a data processing system to the presentation system, said data being transferred using the "by-name" convention, in which data is transferred as data strings comprising at least one data element. Each data element comprises identifiers and the data element unambiguously represents the information to be presented.

The invention also relates to a system for the transfer and presentation of information, said system comprising a data processing system and a presentation system.

In large data networks connected to a mainframe computer and having a large number of users that utilize the same applications, it will normally be very difficult to develop applications with associated screen displays that satisfy the needs of all users at the same time. In a traditional mainframe network, the data power resides in the mainframe and data is transferred to and from the screen terminals as formatted screen displays where the mainframe programme establishes a formatted screen display before the data is sent to the screen terminal.

In such a system, there will normally only be a minimized possibility of performing an individual adaptation of applications necessitating the development of entirely specific applications for the individual user; such a situation easily becomes untenable since the further development and error correction must then be made for several applications even though in principle, it is the same application with individual modifications only.

With the appearance of PC work stations with associated graphical platforms the problem has arisen that many users, but not all, choose not to utilize traditional character-based screen terminals and instead use work stations with graphical platforms prompted by the desire to benefit from the wide range of available office automation applications. The users of work stations with graphical platforms now perform the character-based applications via a so-called "terminal emulator" which emulates a traditional terminal in a single window but which does not offer any further possibility of a "logical" connection with programmes specifically designed to the graphical platform.

Concurrently herewith, there is a need for the individual user to be able to perform an individual adaptation of the screen presentation of the data transferred to a user terminal from the mainframe programme.

It is an object of the present invention to provide a method and a system which solve the above problems in a simple and user-friendly way and which thereby permit the presentation of data or information transferred from a data processing system to a presentation system in such a manner that the presentation system can be implemented in a work station with a graphical platform or can be implemented in connection with a character-based screen terminal such that the individual user can adapt the presentation to his or her specific needs and such that only relatively limited rewriting of the existing mainframe code is necessary for the programmer.

In the above-mentioned transfer of data in data strings, at least one identifier will be associated with each data element. This identifier may contain a piece of information in itself but in most cases, a data element will also contain a value. A data element may also contain presentation parameters or attributes and a data element can thus contain one or more identifiers as well as a value and/or one or more attributes. Both an identifier, a value and an attribute can contribute to the information of the data field. The data elements can have an arbitrary order in the data string.

The term attributes mentioned below denotes attributes corresponding to presentation parameters.

According to the present invention, the above-mentioned problems are solved using a method for presentation of information in a presentation system, said method comprising:
transferring data from a data processing system to the presentation system, said data being transferred as data strings comprising at least one data element, wherein each data element, comprising at least one identifier, unambiguously represents information,
identifying in the presentation system one or more presentation parameters or attributes by means of at least one identifier in a data element, and
controlling in the presentation system the presentation of the information of the data element by means of the identified determined presentation parameter(s) or attribute(s).

Presentation systems according to the invention may be designed such that when reading an identifier, a search in a presentation table can be made; this will provide information as to how the associated information is to be presented in a screen display.

It is a preferred embodiment of the invention that the presentation parameters or the attributes are identified or determined on the basis of a set of presentation parameters or attributes comprising at least one static and at least one dynamic presentation parameter or attribute. Moreover, it is preferred that for at least one identifier, a plurality of attributes is identified or determined.

The invention also relates to a system for transfer and presentation of information, said system comprising a presentation system and a data processing system, wherein
the presentation system and the data processing system are adapted to exchange data as data strings comprising at least one data element wherein each data element comprising at least one identifier unambiguously represents information,
the presentation system is adapted to identify or determine one or more presentation parameters or attributes by means of at least one identifier in a data element, and
the presentation system is adapted to control the presentation of the information of the data element by means of the identified or determined presentation parameters or attributes. It is preferred that the presentation system is associated with or has one or more associated tables indicating the connection between the presentation parameters or the attributes and the identifiers.

In a preferred embodiment, the presentation system is adapted to identify or determine the presentation parameters or attributes on the basis of a set of presentation parameters or attributes comprising at least one static and at least one dynamic presentation parameter or attribute. Furthermore, it is preferred that the tables comprise a first and a second table, the first table indicating the connection between the static attributes and the identifiers, and the second table indicating the connection between the dynamic attributes and the identifiers. In a specific embodiment of the system, at least one identifier corresponds to a plurality of attributes.

In the following, the concept underlying the present invention will be referred to as the FLEX concept having FLEX interface, programmes, clients, data server, application server, etc.

In the following, reference is also made to a graphical platform of the WINDOWS type termed Windows. Furthermore, reference is made to character-based screen terminals of the type IBM-3270, referred to as 3270-type terminals, and reference is also made to UNIX platforms.

Embodiments and details of the FLEX system will also appear from the claims and the detailed description given in connection with the drawings.
Figure 1 illustrates a mainframe programme designed to receive and transmit data in the form of formatted screen displays,
Figure 2 illustrates a mainframe programme corresponding to the programme in fig. 1 but in which the screen retrieval parts and presentation parts have been replaced with data string retrieval parts and presentation parts,
Figure 3a and b illustrate mainframe programmes comprising both screen and data string retrieval parts and presentation parts,
Figure 4a, b and c show block diagrams for an existing solution with a mainframe computer and a 3270-type terminal, a Client/Server solution according to the invention with a 3270-type terminal and a Client/Server solution according to the invention with a work station as the terminal, respectively,
Figure 5 illustrates an example of an application server coupled to several clients,
Figure 6 illustrates the use of communication modules in a Client/Server solution,
Figure 7 is a block diagram showing examples of attribute tables,
Figure 8 shows an example of a filled-in screen display,
Figure 9 shows an example of an empty design display,
Figure 10 shows an example of a design display with input fields,
Figure 11 shows an example of a design display with output fields,
Figure 12 shows an example of a design display with fields in groups,
Figure 13 shows and example of a design display with fields in lists,
Figure 14 shows an example of a design display with labels,
Figure 15 shows an example of a design display with menus and buttons,
Figure 16 shows an example of a screen display with filled-in fields,
Figure 17 shows an example of a screen display with filled-in fields in a group,
Figure 18 shows an example of a screen display with filled-in fields in a list,
Figure 19 shows an example of a screen display with a filled-in data string,
Figure 20 shows an example of a WinFLEX start-up display,
Figure 21 shows an example of a WinFLEX start-up display with logon dialogue,
Figure 22 shows an example of the communication between a client and a data server in connection with logon,
Figure 23 shows an example of the selection of application profile in Win-FLEX,
Figure 24 shows an example of the start-up of WinFLEX with application profile for B354,
Figure 25 shows an example in which the user has filled in the input fields *CPR* (civil registration number) and *YEAR* and presses *Retrieve,*
Figure 26 shows an example of the communication between a client and a data server in connection with a SELECT request,
Figure 27 shows an example in which data from the data server has been returned to the client and is displayed on the screen,
Figure 28 shows an example in which calculation on the data server has been terminated and data can be displayed on the screen, and
Figure 29 shows an example corresponding to the ending of the programme or the client.

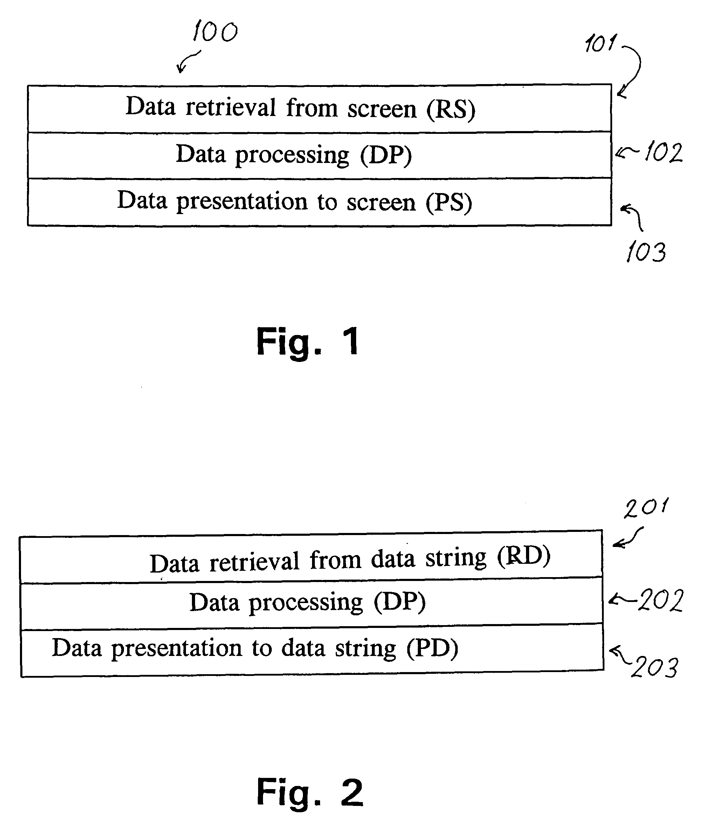

Figure 1 shows an existing mainframe programme 100 for use in a data network without FLEX interface. Such a programme typically comprises: a screen retrieval part 101 (RS), a data processing part 102 (DP) and a screen presentation part 103 (PS). The programme receives a request from the user terminal via the screen retrieval part, data is then processed and/or retrieved via the data processing part and in the screen presentation part, a formatted screen display is designed which is sent to the user terminal. Data can also be stored via a storage part. In this type of data transmission, in which data is transferred as formatted screen displays, the user terminal need not "think" about how to present data since this has been determined in the presentation part of the mainframe programme.

In so-called Client/Server networks, it is possible to transfer data by using the so-called "by-name" convention. Data is transferred as one long data string as information is sent as data elements, at least one identifier having been indicated for each data element. In such identifier presentation, a data processing system, be it a mainframe or a server programme, must be equipped with a data string retrieval part 201 (RD) adapted to retrieve data in the form of data strings or "streams" and a data string presentation part 203 (PD) adapted to enable the presentation of data strings to a presentation system which may be a client. This is illustrated in Figure 2 with 203 indicating the data processing part (DP).

If a maximum exploitation of a graphical interface to the client in a Client/Server network is required, the server programme should be initially designed hereto. For existing networks having a large number of mainframe programmes as that shown in Figure 1, it will be a highly demanding task to rewrite all these programmes so that a maximum exploitation of the graphical platform at the client's end can be obtained. In the existing mainframe programmes, in which formatted screen displays are transferred, the most essential and most comprehensive part of the programme is constituted by the data processing part (DB). It is, consequently, undesirable to make corrections in this part of the programmes but on the contrary, it is relatively easy to design new programme parts for the input part and the presentation part so that these are rewritten to data string presentation or stream presentation. By replacing the RS and PS parts of the programme in Figure 1 with an RD and a PD part, a programme can thus be obtained as shown in Figure 2 in which data can be transferred in data strings in a Client/Server network.

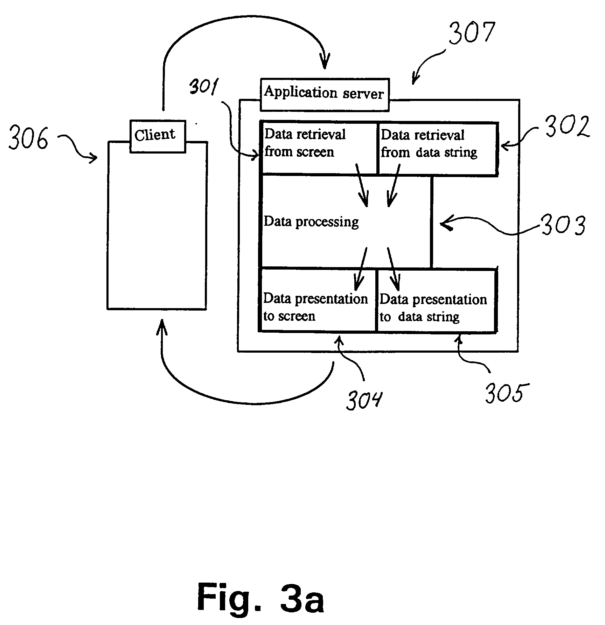

However, it could be imagined that a certain number of users still desires to maintain a data exchange as mentioned in connection with the programme shown in Figure 1. Therefore, in a transitional period it may be desirable to provide the data processing programme in the mainframe or the server with both an RS and an RD retrieval part as well as corresponding presentation parts PS and PD. This is illustrated in Figure 3a in which a client is connected to an application server containing the data processing programme 300. The programme in Figure 3a thus comprises an RS, 301, RD, 302, DP, 303, PS, 304 and a PD, 305, part. A request is sent from the client 306 to the server 307 and from this request, the server can determine whether data is to be transferred as formatted screen displays or as data strings.

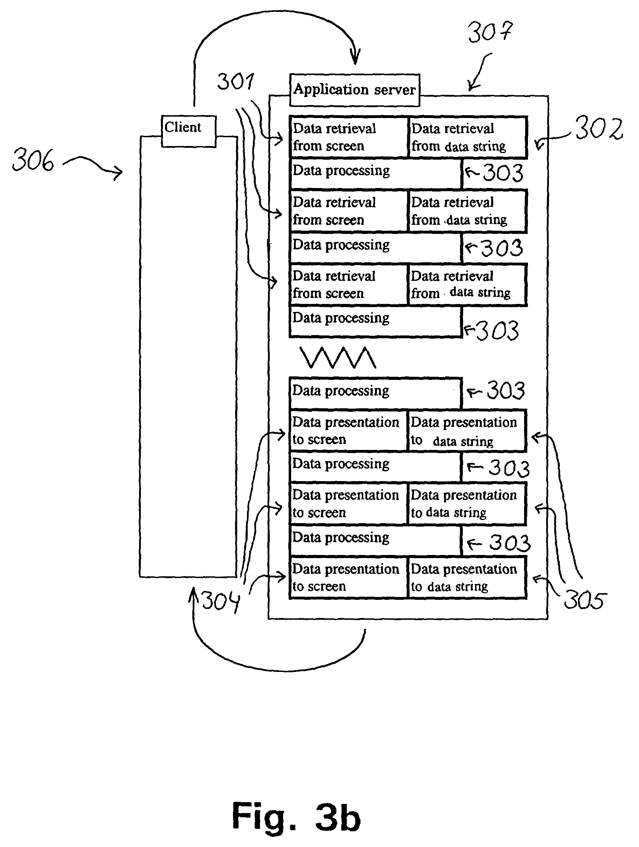

Figure 3b shows a situation corresponding to that shown in Figure 3a, but in this case the programme in the server is designed such that data is retrieved, data is processed, new data is retrieved, new data is processed, and correspondingly part of the processed data is presented, new data is processed, new data is presented, etc. Programmes of this type require a comprehensive adaptation work since a corresponding data string part must be designed for each retrieval part and presentation part. Figure 3b uses the same numbering as in Figure 3a.

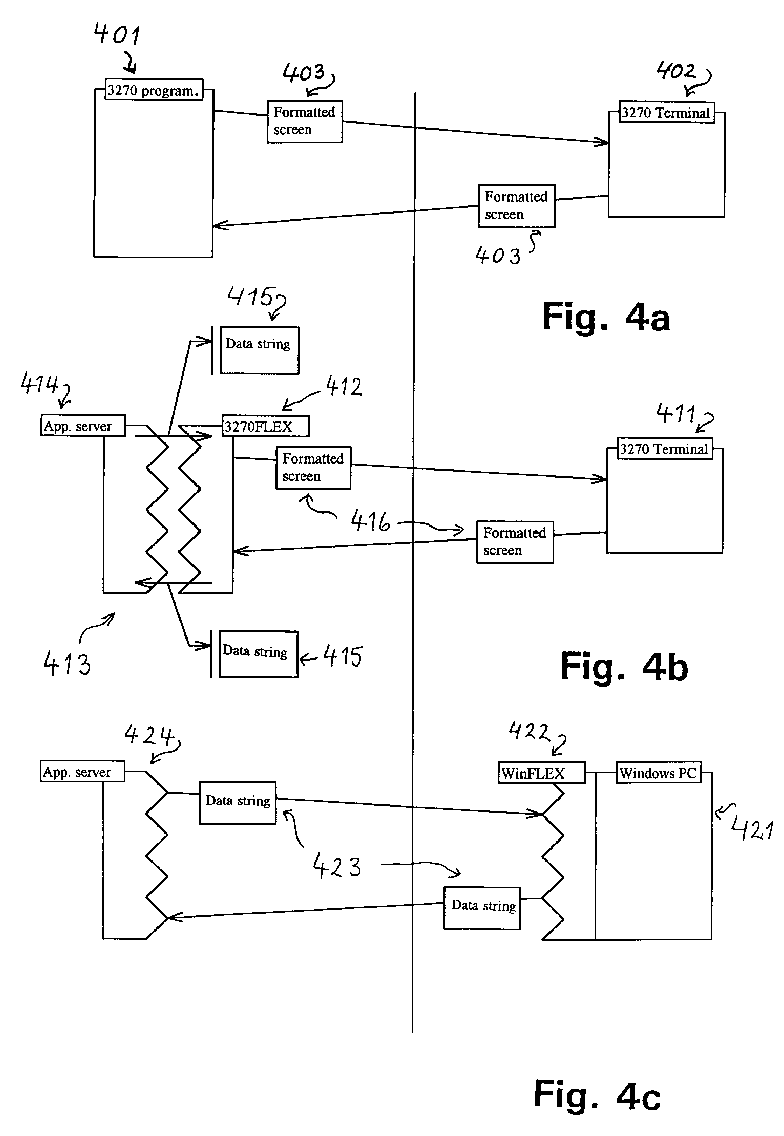

Figure 4a shows an existing solution with a mainframe computer 401 and a 3270-type terminal 402 in which the data processing programme in the mainframe corresponds to the programme in Figure 1. In this case, data is only transferred in the form of formatted screen displays 403.

Figure 4b shows a Client/Server solution according to the invention with a 3270-type terminal 411. A special client denoted 3270FLEX 412 has been designed which has been implemented on the mainframe 413 which also comprises the server 414. The 3270FLEX client is designed so as to be able to transmit and receive data in the form of data strings 415 to the server ("by-name" data transfer) and so as to be able to receive and transmit formatted screen displays 416 to the 3270-type terminal. A database will normally be attached to the client in which database one or more tables having attributes or presentation parameters can be stored.

Figure 4c shows a Client/Server solution according to the invention with a work station as the terminal in which the client has been implemented on the work station and in which the server has been implemented on the mainframe. The work station shown in this Figure has a graphical platform of the type Windows 421 and a special client denoted WinFLEX 422 has been designed. Data is transferred as data strings 423 between the client 422 and the server 424 and in this case, the server is implemented on the mainframe and the client is implemented on the work station. Also in this case, a database for storing presentation profiles can be attached to the client.

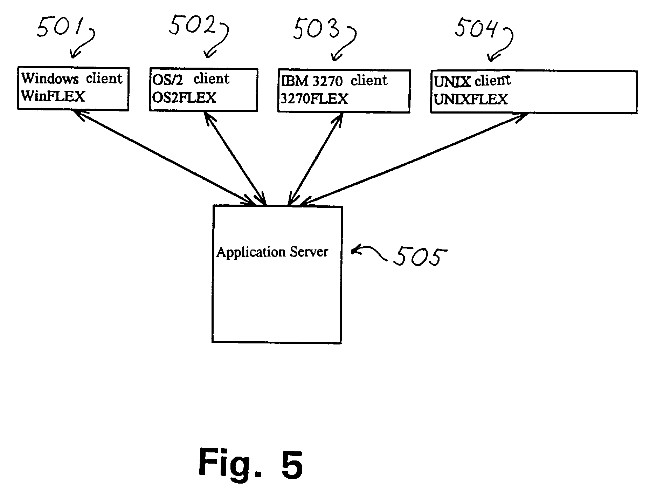

When transferring data by means of data strings, the server in a Client/Server network becomes independent of the terminal or platform used by the individual user as the server can understand and service different clients in the same way. However, it is necessary to develop clients that correspond to the different platforms with which to communicate. Examples hereof are Windows client 501 (WinFLEX), OS/2 client 502 (OS2FLEX), IBM 3270 client 503 (3270FLEX) and UNIX client 504 (UNIFLEX). This is illustrated in Figure 5 in which the server is designated 505. It has been mentioned above that the server is implemented on a mainframe but in a Client/Server system the server is simply required to be implemented on a computer having suitable processing power; accordingly, it is required that the client be implemented on a computer having suitable processing power which is why both the server and the client can be implemented on a work station in a Client/Server system. Such a work station may for instance be a PC work station.

In Figure 5, an example of a server coupled to several clients is shown; similarly a network can be designed in which a client can call various application servers or data servers. The application servers can be implemented in different computer units but they may also be implemented in the same computer unit.

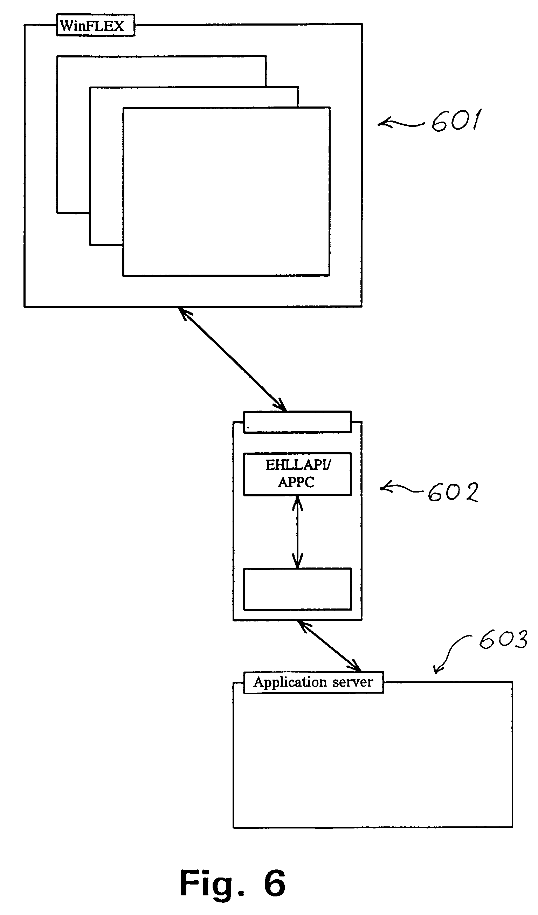

Figure 6 illustrates the use of communication modules in a Client/Server solution. For each platform having an associated FLEX client, an associated communication modulus should likewise exist. Figure 6 shows a WinFLEX client 601 in this case being performed on a PC work station and which communicates via a communication module 602 with the server 603 which is here performed on a mainframe. The communication module can communicate with the server through a terminal emulator which can support an EHLLAPI or an APPC interface. In figure 6, it is also illustrated that several applications can be performed at the same client.

When transferring data in the form of data strings between a client and a server, the data strings must all comply with the same syntax, the syntax being the formal definition of the regulation describing how the individual data elements in the data string are designed and combined. Each data element contains at least one identifier and will normally also contain a value; in addition hereto, a data element can also contain a series of presentation information also termed attributes or presentation parameters. When transferring data from a server to a client, the information in a data element can be displayed in one or more fields at the client which is why the data string is also said to contain a number of fields; in the case in which the data field contains a value, the value is termed a field value and the associated identifier can be termed a field identifier. The identifier is an unambiguous identification which the client can use for a search in a table for the determination of where and how to present the information.

An identifier can be constructed with a structure having several components. An identifier having no structure and therefore not comprising several components is termed a simple identifier herein. However, several data corresponding to several values with the same identifier may occur, a user can for instance have more values with a field identifier corresponding to the field "interest paid". It may therefore be necessary to expand the identifier with an extra component, for instance an index. If necessary, the identifier can be expand with several indexes, each index corresponding to a component. An identifier expand with indexes is called a composite identifier.

In certain cases, a need may exist for attaching different values to fields with fundamentally the same identifier. To the value should be attached a further identification recognizable by the application server which can be done using position numbers. An identifier comprising one or more components that correspond to positions or position numbers is called an expanded identifier. It will naturally also be possible to have identifiers which are both expanded and composite in which case the identifier is called a complex identifier. The identifiers described herein can also comprise a component corresponding to a version number or a version. In the following, identifiers having more than one component collectively are referred to as multi-component identifiers.

Table I shows examples of a simple, composite, expanded and complex identifiers, the identifiers being combined with an associated value. The value is indicated after an equation mark. The number 1001 indicates a simple identifier and 2000 indicates the value.

**TABLE I**

| | |
|---|---|
| Simple identifier: | 1001=2000; |
| Composite identifiers: | 2:1001=2000; 1:1001=2000; 2:1:1001=2000; |
| Expanded identifiers: | 1001.1=2000; 1001.1.2=2000; |
| Complex identifiers: | 2:1001.1=2000; 2:1:1001.1.2=2000; |
| Complex identifier with the version number 94: | 2:1001.94.1=2000; |

It will be possible for more components to correspond to each of their respective index and for several components to correspond to each of their respective position number which means that it is possible to have indexes and position numbers in several levels. In a preferred embodiment, a multi-component identifier always contains a simple identifier and a version number.

However, it will also be possible to obtain an unambiguous connection between the identifier and the information to be associated with a value or a field value without using identifiers having several components since only one identifier for each individual piece of information need exist which may be obtained by using identifiers with a consecutive numbering. Moreover, it will also be possible to have identifiers with several components without using the separation marks used herein as the individual components may correspond to pre-determined positions in a multi-component identifier. However, when updating the information associated with an identifier, it has proved expedient to use identifiers having several components.

As mentioned, with each client a table will normally be associated, said table having stored attributes or presentation parameters with an unambiguous connection between the identifier and the attributes to be used in connection with the presentation of the information. Examples of attributes that can be stored in a Table will be given below in the present specification. In a preferred embodiment of the invention, however, the attributes are divided into a static part and a dynamic part, the static attributes being stored in a first Table, termed the Field Table, and the dynamic attributes being stored in the second Table, termed the Screen Field Table. The static attributes are normally entered in the field table when a field is defined in this table whereas the dynamic attributes can be entered in the screen field table when a screen display is designed or adapted at the client. However, a set of default dynamic attributes may also have been offered. Thus, the individual user may design a profile or a screen profile which can be stored in the second table and which comprises the user-adapted indication of the dynamic attributes. An example of the construction of a profile is given below in the present specification.

As mentioned above, the data elements can also contain attributes. When transferring data or information from the data processing system to the presentation system, these transferred attributes can be used in a preferred embodiment of the invention for overwriting attributes stored in one table. The table may in this case be the first table corresponding to the static attributes but it may also be the second table corresponding to the dynamic attributes.

In a preferred embodiment, the attribute tables are stored in one or more databases associated with the presentation system. This refers to a "logical" association as the databases need not be physically implemented on the presentation system but this system must have access to the databases. The first table is thus preferably stored in a centrally located database which can be located together with the data processing system and the second table can be located decentrally with the presentation system. Both the first and the second table may also be stored in the same database.

On presentation of the information of a data element, a search is made in the tables associated with the client and when comparing the identifier with data in the profile table or the profile tables, the desired attributes are found which indicate how to present the value. For any given identifier, several static and dynamic attributes may be associated. In those cases in which the identifiers comprise several components, the profile may also include a connection between one or more components and associated attributes; thus, in a preferred embodiment a first combination of components is used for determining the static attributes associated with the identifier; likewise, a second combination of components may be used for determining the dynamic attributes associated with the identifier. In this case, the second combination may be a combination of the first combination and one or more components not involved in the first combination. In a specific embodiment, the first combination of the components simple identifier and version is formed, whereas the second combination may for instance be formed by the components simple identifier, version and position.

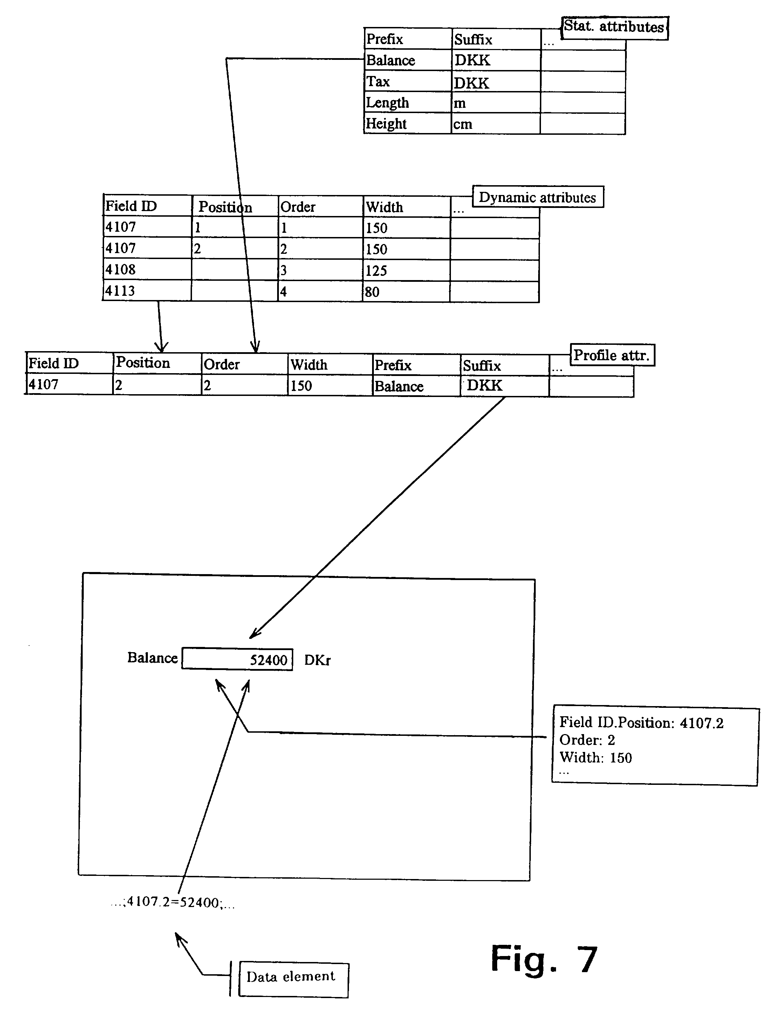

Figure 7 shows an example of the connection between identifiers and attributes. 701 is an example of a first table in which for each field identifier or each simple identifier, the static attributes have been indicated, said attributes being a prefix and a suffix. 702 indicates an example of a second table in which the dynamic attributes are stated for expanded identifiers comprising both the components: simple identifier or field identifier and position. In 702, the dynamic attributes: order and width are stated. 703 indicates a composite attribute profile for a data element having the identifier 4107.2 corresponding to the simple identifier 4107 and the position 2. The data element contains the value 52400 and by means of the attribute profile, the value may be presented on a screen 704. Since many different identifiers may occur, it will also be possible to combine many different attribute profiles based on searches in the static and dynamic attribute tables.

It will often be desirable to exchange attribute tables between the same type of clients. Consequently, it is preferred that the tables designed and stored in a first client database can be transferred to a central database, from where they can be transferred to a second client database, the first and the second client being of the same type. The term client database is intended herein to refer to a database associated with the client and in which the client has a storage of the attribute tables.

As mentioned above, a data element may also comprise attributes. According to an embodiment of the invention, data elements can thus be sent from the data processing system to the client in which one or more data elements comprise attributes capable of overwriting attributes or presentation parameters indicated in one or more tables associated with the presentation system. As mentioned above, the tables may be stored in a database associated with the presentation system.

In the following chapters 1-8, a technical explanation of an example of the FLEX concept according to the invention is given. The embodiments stated in chapters 1-8 serve only as examples since other embodiments according to the invention could be elaborated.

### 1. Introduction

In the following, FLEX is described from a technical aspect. The purpose is to describe the concepts and the architecture associated with FLEX.

FLEX is a tool under permanent development. Consequently, FLEX is largely developed through prototyping and many technical details may therefore be added continually. This document is therefore revised as the project progresses and FLEX obtains increased functionality.

In the following, concepts in the form of a programming code or data or in the form of a syntax are described by means of EBNF notation. The programming code or data is described using the following typography:
Programming code or data whereas the syntax is described using the following typography:
**Syntax**

### 2. The FLEX concept

FLEX is a concept offering increased *flexibility* compared with existing mainframe programmes and simultaneously utilizing the graphical *user interface* offered by Windows. FLEX may preferably also require a structured logical *division* in the server programmes.

### 2.1. Flexibility

The flexibility is manifested in the users being given the possibility of adapting the presentation of information in the programmes. The adaptation may be carried out in many different levels ranging from the individual user to an entire department.

A user may, if assigned rights thereto, freely adapt the presentation in the programmes. Other users may likewise freely adapt the presentation without overwriting the first user's adaptations. All this is controlled by maintaining different profiles in a database for the different users.

The users may perform a continuous adaptation of the programmes. Adaptation can be performed via "point and click" with few menu commands and takes only very few seconds to perform.

The adaptation of programmes is, inter alia, performed by displaying or saving different information. Pieces of information can be displayed or saved individually or together with other pieces of information in groups. The users are thereby offered the possibility of displaying the particular information of interest to them.

The adaptation of programmes may also take place by moving information. Pieces of information may be located on absolute coordinates or relatively with respect to other pieces of information. In the latter method, the user selects an order for the information and the system determines the actual coordinates. Information may be moved individually or together with other pieces of information in groups. The users are thereby offered the possibility of displaying information in a context relevant to the particular task presently performed by the users.

The adaptation of programmes may finally take place by changing the parameters used for controlling *the presentation* in the programmes. Such parameters may, for instance, be parameters stating the layout strategy to be used by the system when information is to be located relatively in relation to other information.

A programme may thus be presented in many different ways each complying with specific or general needs. This renders the programmes more useful for the individual users.

But it also imposes heavy requirements on the users. Some users will not be able to comply with the requirements and it will consequently be necessary to enter restrictions on the flexibility into the system. The users may be assigned rights on different levels to adapt the programmes.

The users not assigned any rights will experience programmes working more or less as the existing programmes. Those users assigned rights to adapt the programmes will experience a substantially increased functionality.

### 2.2 User interface

FLEX data server programmes may be performed in different types of machines and thereby under different user interfaces. First, the FLEX programmes will be used on PCs with Windows and on the mainframe with 3270-type terminals.

The most important change in FLEX data server programmes as opposed to the present mainframe programmes is, of course, found in the Windows version, also termed WinFLEX, which offers genuine Windows *look-and-feel.*

WinFLEX is not a screen scraping solution simply attempting to read existing 3270 displays and presenting these graphically including the shortcomings naturally found under 3270. WinFLEX, however, becomes the client in a *Client/Server* solution which on requests sent to the Server can obtain the data to be presented. WinFLEX then controls the presentation of the requested data by means of a description capable of being saved/residing in a database.

An example of Windows look-and-feel: In WinFLEX, the users are inter alia given the possibility of choosing between several options by selecting a descriptive text from a pick list instead of having to enter a less descriptive programming code as is the case with traditional 3270 programmes.

The 3270 version, also termed 3270FLEX, will likewise be the client in a Client/Server solution which sends requests to the Server for retrieving data to be presented. The presentation in 3270FLEX is not graphical but character-based for obvious reasons.

The FLEX concept envisages the support of other platforms in the course of time. If this is desired, clients corresponding to the individual platform can be developed. For instance, a (general) client can be developed for the OS/2 platform which means that all data servers will hereinafter be able to communicate with this platform.

### 2.3 Phase division of the development

The development of FLEX programmes is divided in an entirely natural manner. However, the development of new FLEX programmes will differ from the adjustment of existing mainframe programmes to FLEX programmes.

The development of a new FLEX programme may take place in three phases. The planner specifies the information to be processed and how to process it. A set of FLEX *requests* are thereby defined. The programmer can then implement a number of routines on the mainframe servicing the FLEX requests. Finally, the designer will describe the presentation of the FLEX programme in a designer tool.

By dividing the development in this way, the qualifications of the personnel are best utilized. An employee is able to specialize to a higher extent and solve the tasks which that particular employee is good at: the planner can analyse the users' needs and describe these needs; the programmer writes a PL/1 code, for instance, which retrieves and saves information in registers or makes complex calculations; and the designer deals with the presentation of the programme such that the programmes will be uniform and comply with a user-friendly standard.

When existing programmes are made compatible with FLEX, the planner chooses to process information for each mainframe programme in the same way as before. The requests are consequently evident.

The programmer can rewrite the existing programmes so that they do not present the information any longer. The programmes should, however, still collect, calculate and save the information as hitherto but should now undertake these tasks on the basis of requests from the client. The existing mainframe programmes should be reused to the highest extent possible. However, it is important to emphasize that some mainframe programmes are not suitable for modifications and must thus be rewritten.

As is the case with the development of new FLEX programmes, the designer can also describe the presentation in a designer tool in the case of existing programmes.

### 3. Client/Server

FLEX solutions are by nature Client/Server solutions. Clients may be developed for various types of machines, firstly for Windows on PCs and for 3270 on the mainframe. In addition, a number of servers can be developed on the mainframe - one for each existing mainframe programme - which services all types of clients.

### 3.1 The client

The client's task is to collect and present data. The client may also provide the user with the possibility of modifying and saving data. The client may perform these tasks by sending requests - hereinafter also termed *transactions* - to the Server.

Transactions are *data strings* - packages of data - sent between the client and the Server. These data strings can be described by means of the EBNF notation. This is shown below, the EBNF, however - for reasons of clarity - being somewhat simplified (a more complete description is given i chapter 5, *Data strings) :*
**transaction = data string**
**data string = trans code "," func-id ["," error code]**
**["," status] ["," version] ":" field list "#".**

The above EBNF can be described in words as follows:
"A transaction is a data string. A data string is a sequence of characters consisting of a transaction code, identification of the function to be performed on the data server, optionally - but not necessarily - an error code, optionally - but not necessarily - some status information, optionally - but not necessarily - information on the version number for the transaction, a colon (":"), an - optionally empty - list of fields and - as the end character - a hatch mark ("#")."

An example of such a transaction - in this case for a B354 transaction - could be as follows:
"B354,SELECT:4000=2512871243;99=93#"

The client may also use the Server for collecting, calculating and saving data. It is interesting to note that *the client need not itself calculate data*. It is a deliberate strategy that all calculations are only made on the mainframe and thereby the Server. Should this strategy, however, be changed at a later stage, it will be relatively easy to implement in FLEX.

### 3.1.1 Request for data

Requests for data - i.e. transactions collecting data from the data server - are characterized by a specific function identification/request code, SELECT.

In the above example, a SELECT request was in fact shown. It highly resembles the existing B354 transaction. However, the syntax is somewhat different - inter alia the arguments CPR (civil registration number) and YEAR are stated as 4000=2512871243 and 99=93, respectively.

The field arguments (4000=2512871243 and 99=93) are used for selecting a section of the database as is the case in the existing transaction.

In the EBNF notation, this is represented as:
**select-**
**data string = trans code ",SELECT" ["," status] ["," version] ":" field list "#".**

The result of a SELECT request is also a *data string.* This will be provided with an error code and will contain the list of fields selected by the calling SELECT request.

### 3.1.2 Other types of requests for data

Transactions making calculations or updating data on the data server may have different function identification/request codes. These codes may be arranged between the designer of the FLEX client and the constructor of the data server.

When modifications of existing programmes on the data server are made, request codes corresponding to the existing PF keys or buttons will typically be used (since these are the functions desirably to be mimicked)

A transaction for updating in B354 could for instance be represented as:
"B254,UPDATE:1713=7500000;1720=500000#" or as below if it is e.g. activated by means of a press button or key corresponding to PF4:
"B354,PF4:1713=7500000;1720=500000#"

Generally, there is much latitude as long as the designer of the FLEX client and the constructor of the FLEX data server agree on the use of codes.

The result of these other types of requests is also *data strings.* These may also as a minimum be provided with an error code, but whether they also contain fields entirely depends on the individual request.

### 3.2 The server

The server is a "classical" database server. The language of the request, however, is not SQL but a proprietary language briefly described above. The server handles requests from the client and thereby gives the client the possibility of, inter alia, reading, calculating (however, no actual calculations are made in FLEX as is the case with decentral solutions) and writing information.

In those cases in which the server is to be developed from existing mainframe programmes, it may often be implemented by reusing the code to a vast extent. This offers the option of the so-called "Muck-up" solution mentioned below.

By designing the entire server, a structure can be obtained which allows for a construction which is well-suited for FLEX. The decisive feature is that in principle, the data retrieval, the data processing and the dialogue are separated.

Certain existing programmes may have a structure which will only be reprogrammable for use in FLEX with much difficulty. If it is desired that these programmes be changed to FLEX programmes, the so-called "Muck-up" is a possibility. In this way, a portion of programming codes is inserted directly by the programmer into the existing programmes in those positions where the individual data fields are processed. By parameter controlling the programme, it is possible to let the programme act as a traditional programme as well as a data server with respect to a 3270 client or a windows client.

*The above method is not an ideal solution but may be chosen if a rapid result is to be obtained from existing programmes.*

### 3.3 Communication

Requests and the results of the requests can be communicated between the client and the server by means of a communication module. For each platform supported by FLEX there is a dedicated client, and a dedicated communication module may be associated.

In the case of 3270 FLEX, the data server can communicate directly with a FLEX presentation programme which, i.a. from a database, designs a traditional CICS map which is sent to the screen.

In the case of WinFLEX, the communication module initially communicates with the Server through a terminal emulator supporting the EHLLAPI interface.

### 3.4 Formats

For both types of clients and for the types of clients added later, the format on the requests and the results to be sent through the communication module are the same irrespective of the type of client. In other words, the data server understands and services Win-FLEX, 3270 FLEX and 'YouNameIt FLEX' in the same way.

### 4. Design of profiles

A "FLEX programme" may comprise a profile for use by the client as well as a data server. Information corresponding to the profile may reside in a local database associated with the client. The profile may indicate where and how specific information is to be displayed via the client. The profile is set up by means of a designer tool allowing a person to design the display directly by means of different functions, e.g. drawing tools.

When a profile is to be designed for the client, it is important to visualize the entire set of information to be presented before commencing the work. The information to be processed must be presented in a clear and easily accessible way which is the task undertaken by the designer via the designer tool.

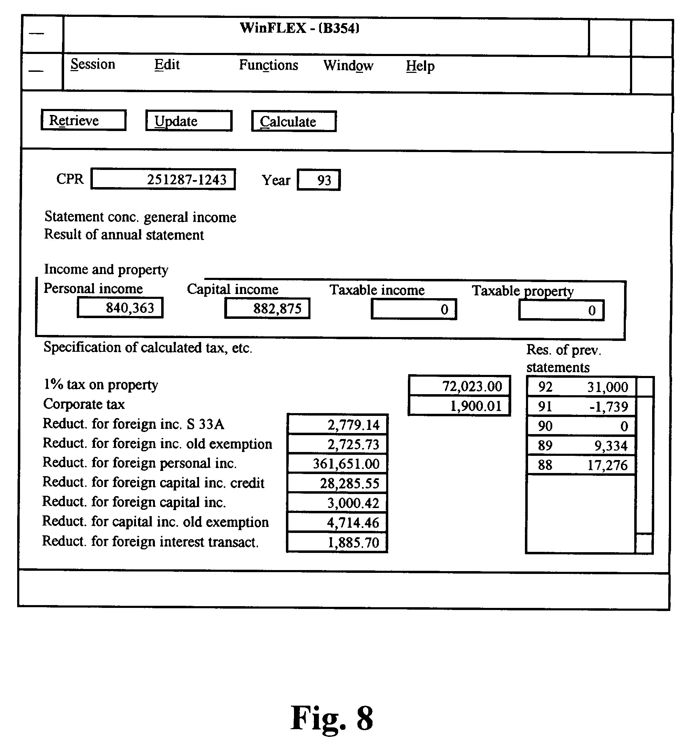

In the following chapter, it is shown how a data string from the data server to the client is able to fill in data in an already designed profile. The filled-in display is in this case used for visualisation, and in the next chapter the setting up of the profile to be filled in with data is then commenced. The examples are shown with the windows facilities that can be used for WinFLEX. In the examples, reference is made to identifiers. These are all randomly selected. In Figure 8 is shown a filled-in screen display/profile.

The following description does not serve as a specification of the designer tool itself but rather as a description of the components that must be found in a FLEX design of a display and how these are connected.

### 4.1 Point of departure for a design

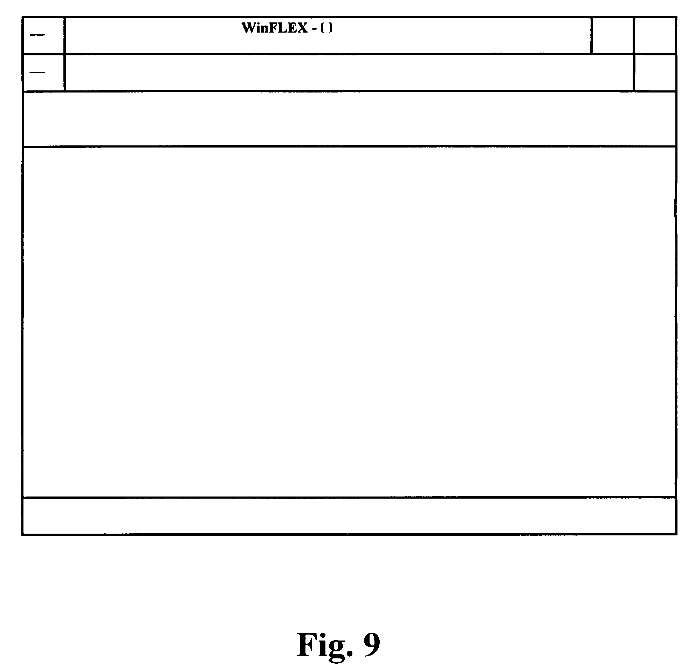

To start with, work is based on an empty display without information. Thus, there are no fields, texts, keys or menus in the display yet. The display is shown in Figure 9. In a CICS environment, a transaction code, e.g. B354, is attached to a FLEX profile. The transaction code is later used for designing a request to the data server.

### 4.2 Input fields

The FLEX programme will typically work with information delimited by a search criterion which may include one or more fields termed *input fields.* The delimitation may e.g. be tax information associated with a particular civil registration number for one particular year. In this hypothetical example, tax information is involved which is why it is relevant to insert two input fields in the empty display; one for the civil registration number and one for the year. (The limitation that the search should be based on 'Tax information' is implicitly vested in the transaction code B354 and a corresponding field for this criterion should therefore not be indicated).

The fields may be marked as input fields and are then assigned the identifiers 4000 and 99, respectively, (these are randomly selected). Please note that only the field identifiers have been indicated but since information on the prefix is found in the local field database, this is stated automatically hereinafter. In this case as "CPR" (civil registration number) and "YEAR". The other attributes of the fields may similarly with the prefix also be read automatically from the database and be associated with the field. Such attributes, however, may be changed later as required. Several versions of the same prefix will also exist in the database since it will not always be relevant to display the entire text. Thus, the identifier 4000 may also contain the prefix "CPR" (civil registration number). The selection of the prefix may also be controlled by means of an attribute.

When starting up this FLEX profile, input is to be entered in the fields 4000 and 99. The other fields may be used as output and will therefore not be indicated as input fields.

However, should this be changed during, for instance, a dialogue, the data server may directly indicate which fields to use for input during communication with the client.

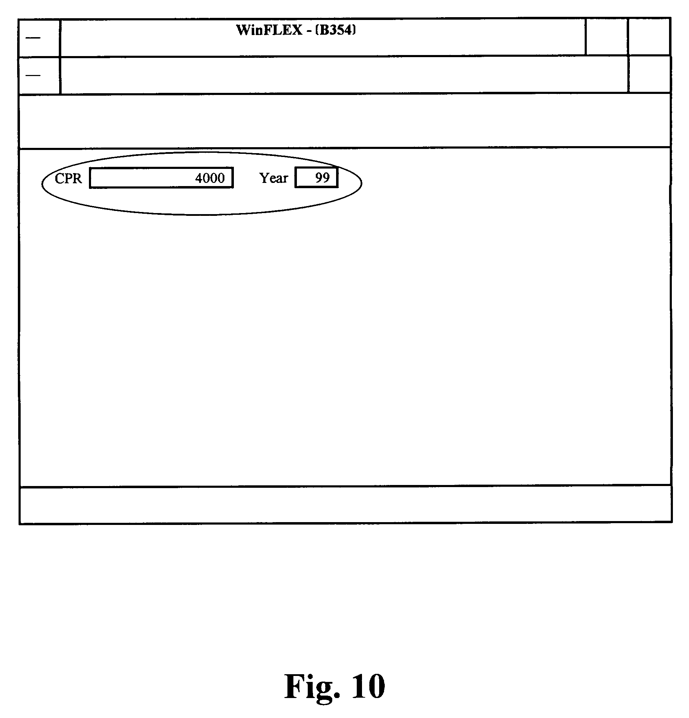

The identifiers in the examples are randomly selected. But the designer should, of course, select the identifiers carefully. In the field table of the client's database, the fields may be described with appropriate prefixes. In this example, the identifiers 4000 and 99 are described by "CPR" (civil registration number) and "YEAR", respectively. Furthermore, the data server which later delivers data to the FLEX profile, B354, will expect to delimit its delivery on the basis of the information contained in fields with the identifiers 4000 and 99. The display is as shown in Figure 10.

As mentioned above, the prefixes in front of the fields can be collected from the client's database. As a standard, the client's prefix may be located directly in front of the field. Thus, it is not necessarily the designer who has entered the prefixes. A further presentation of the above is found in chapter 7, *The Presentation.* The entering of the labels in the profile will be shown below. The values in the fields now illustrate the identifiers of the fields.

### 4.3 Output fields

When the request to the data server has been made, the FLEX client may present the received data. For this purpose, a number of output fields are used which can be stated in the profile.

The locations of the fields are indicated and can then be marked as output fields and be provided with relevant identifiers. The identifiers reflect the identifiers expected by the FLEX client to be found in the data returned by the data server. Consequently, it is necessary for the designer and the data server constructor to decide the information to be returned and accordingly the identifiers to be used.

When the identifiers have been matched, the client can present the relevant prefixes. The prefixes and other types of presentation information for the fields are obtained from the client's database by means of the associated identifiers.

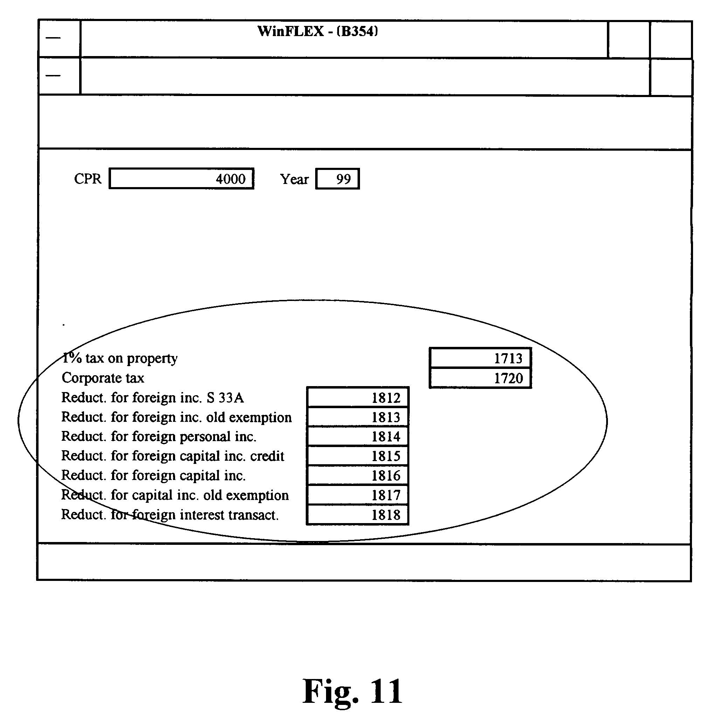

In the example shown in Figure 11, the identifiers 1713, 1720 and 1812 to 1818 are used. The prefixes located in front of the fields have been obtained from the client's database. As a standard, the client's prefixes may be located directly in front of the field. The fields themselves are in turn located in two columns. The designer can determine the number of possible columns for one field and state the column in which to enter the value. A further description of the above is given in chapter 7, *The Presentation.* The values in the fields now illustrate the identifiers of the fields. The identifiers have been randomly selected.

### 4.4 Fields in groups

Some data elements are naturally connected in groups. A citizen's name and address is one example of such data. Another example is information on a citizen's income and property. It is desirable to be able to process these groups of data collectively. It should, for instance, be possible to move them together, display or conceal them and provide them with a common heading. For this purpose, a group may be inserted in the design profile. Later, the fields to be processed together may be entered in the group.

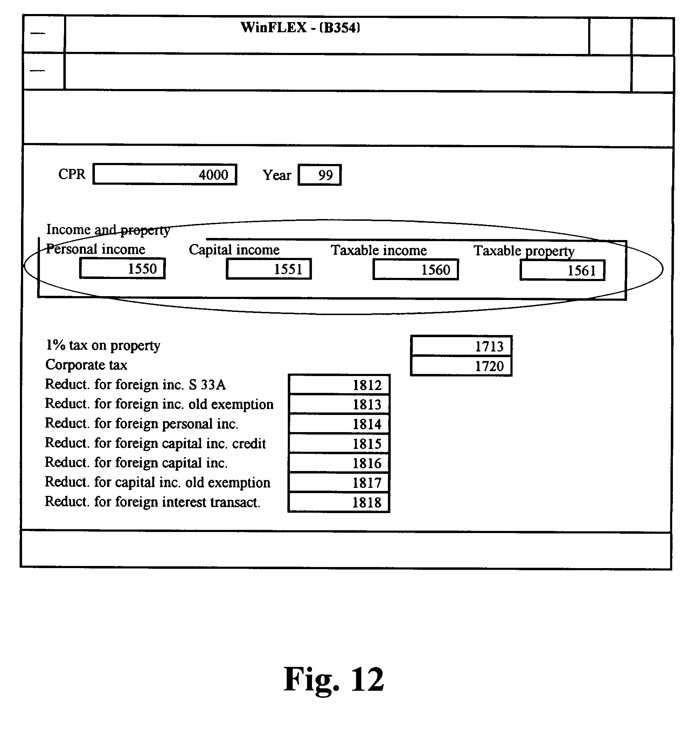

When the group has been established, the designer may enter a prefix and a suffix for the group. In the example shown in Figure 12, the prefix "Income and Property" is entered whereas the suffix is omitted. It should be noted that when established, the group does not describe the fields it contains. It is the designer's task to enter fields in the group and assign identifiers to the fields. The prefixes for the fields appear automatically when the field identifiers are assigned.

In the example in Figure 12, 4 output fields are placed in one group. The fields have the identifiers 1550, 1551, 1560 and 1561. There are no obstacles to placing the input fields in groups as well. In principle, all types of fields, labels and groups may be placed in groups.

The values in the fields now illustrate the identifiers possessed by the fields.

### 4.5 Fields in lists

Some data elements are connected in lists in a natural manner. A list is like a group but differs by containing several occurrences of the same type of information. A group contains only one occurrence of the same type of information.

Like groups, lists may provide the user with the possibility of processing collections of data collectively. Data elements in lists may i.a. be moved, displayed or concealed in conjunction and be provided with a common heading. A list contains a fixed number of lines acting as a "window" and in the case of further data, the arrows may be used for paging up and down.

Lists may for instance be used if the data contains information on a citizen's interest earned. The information, for instance, comprises an entry text and an amount. Few citizens have no entries in that account, some have few entries whereas others have many entries. Therefore, it is not appropriate for a profile to contain a fixed number of fields for the information but should instead contain a list. The designer is then to enter a field in the list for the entry text and a field for the amount. Since the fields occur in a list, the client will automatically repeat the fields by the number received from the data server.

When the list has been established, the designer can enter a prefix and a suffix for the list. In the following example, the prefix "Res. of previous statements" is entered whereas the suffix is omitted. It should be noted that the list, when established, does not describe the fields it contains. It is the designer's task to insert fields in the list and assign identifiers to the fields. The prefixes for the fields appear automatically when the field identifiers are assigned.

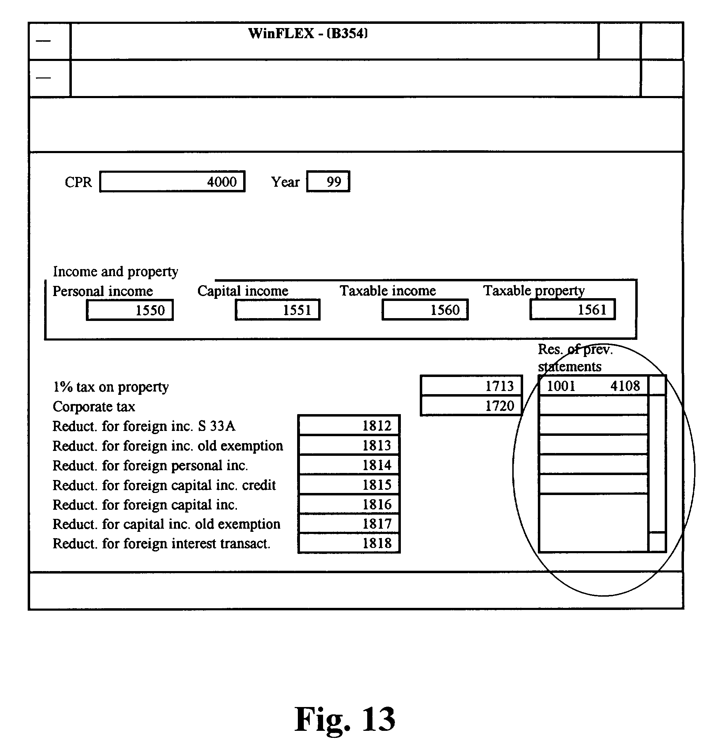

In the example shown in Figure 13, illustrating a design display with fields in lists, a list is inserted for collecting information on a citizen's previous yearly statements. The example is hypothetical but nevertheless illustrates the concept of the lists. In this example, two output data fields are placed in a list. The fields have the identifiers 1001 and 4108. It should be noted that each field is only placed once. The list handles the display of many data which are identified by the identifiers 1001 and 4108, respectively. The values in the fields now illustrate the identifiers possessed by the fields.

### 4.6 Texts and labels

In order to make a FLEX programme more legible, it is favourable to provide the display with some indicative headings. As a rule, the headings are constituted by the prefixes of the groups and the lists but in special cases, it may be necessary to use other types of texts and thereby utilize alternative methods.

Other types of texts may fall into the following categories: Prefixes for fields, fields of the type of text, and labels.

Prefixes for fields may be used as alternative headings by inserting a field and providing it with a suitable identifier. The identifier corresponds to the text in the client's database, which the designer wants to display. The field is then set to display the prefix only and neither the value nor the suffix. This setting takes place by modifying one of the attributes of the field. The attributes are described in chapter 7, *The Presentation.*

Fields of the type of text may be used as headings by inserting a field and providing it with a general identifier. The general identifier may, of course, be defined as a text in the field table of the client's database. The field is then set to display the value and display only and to display neither the prefix nor the suffix. This setting takes place by modifying one of the attributes of the field. In order for the headings to be seen, it will now be necessary for the data server to send a text value to the client with the agreed general identifier. This is a somewhat more troublesome method for making alternative headings but the advantage is based on the data server being able to dynamically select a heading which matches the data basis.

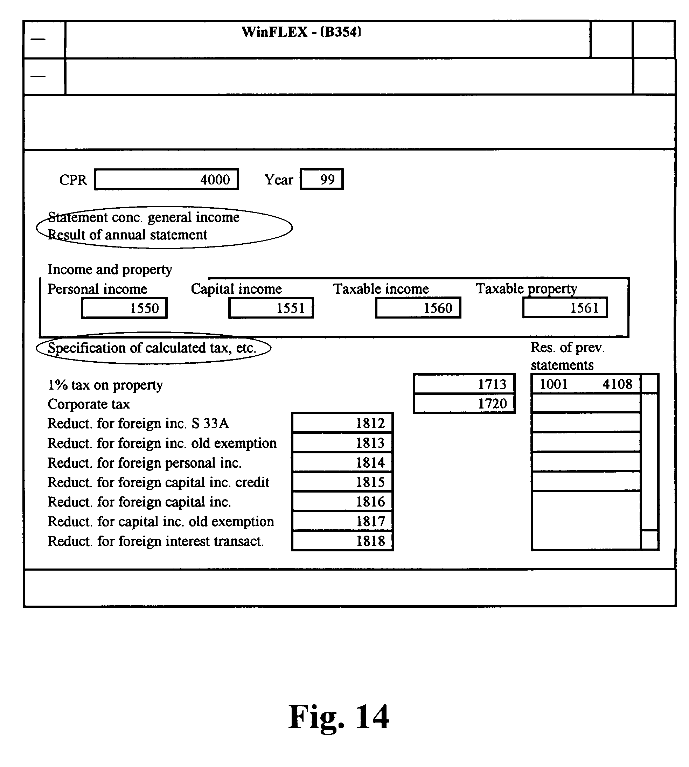

The labels constitute the last method of making alternative headings. It simply involves the insertion by the designer of a field in the display and the definition of this field as a field of labels. The text will always be present in the display irrespective of the data basis. This is the easiest solution but at the same time the least flexible. In the example in Figure 14, 3 labels are located in the display. The texts have no identifiers.

### 4.7 Menus, keys and status

A number of menu items and a status line will generally be associated with the client. These menu items can have an administrative character and can be used for configuring the client. The status line can be used for displaying the client status and in many situations for displaying help texts.

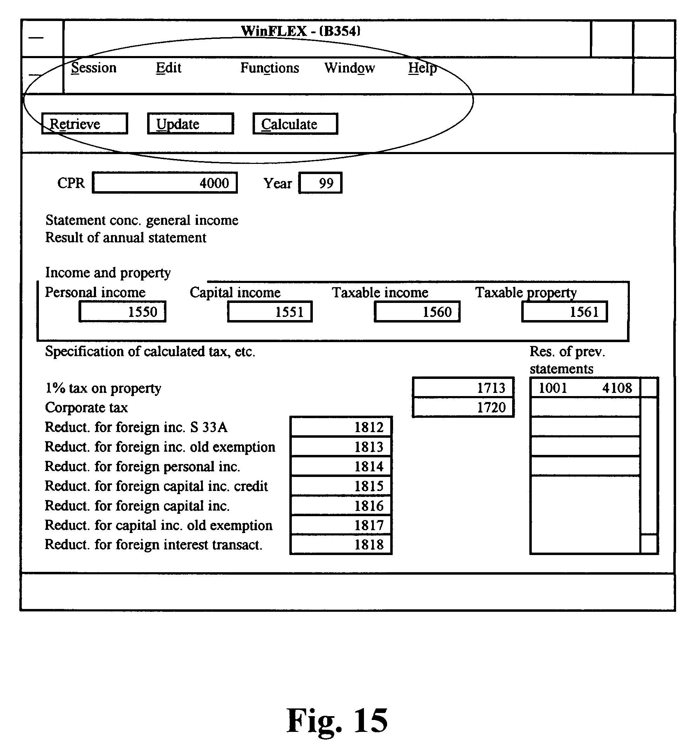

Each FLEX profile may furthermore be associated with a number of specific menu items and function keys or buttons. A one-to-one connection between the specific menu items and function keys or buttons and a menu selection may exist or pressing a corresponding function key may initiate a transaction towards the data server. The designer may select a super set of menu items/function keys or buttons associated with a FLEX profile. This selection i.a. comprises the selection of function names and the selection of function text. It will later be shown how a data server at given points in time communicates to the client which of the selected function names are useful. In the example in Figure 15, a design display with menus and keys or buttons is shown.

In example 3, under the menu item of Functions are sub-menu items with texts corresponding to the texts in the keys or buttons. In this example, the function keys or buttons could assume the function names of SELECT, UPDATE and CALCULATE, respectively.

### 4.8 Further design

In the paragraphs above, the construction of a hypothetical, but typical profile has been described. Focus has relied on fields, fields in groups and fields in lists. The purpose has been to illustrate the grouping mechanisms made available by a FLEX client.

In the examples of the chapter, the attributes of the individual fields were briefly mentioned. The attributes are the modifiable parameters on each field, group or list for providing the designer with the possibility of controlling the presentation. Instead of producing an example attempting to illustrate the use of the different attributes, the attributes are individually described in details in chapter 7, *The Presentation.* One example cannot, of course, cover all combinations of values for the attributes. On the other hand, good understanding of the value set of each attribute and the influence of these values on the presentation will provide the user with good understanding of the multiplicity thereof.

### 5. Data strings

When a client sends a request to the data server on the mainframe, an exchange of data takes place between the client and the server.

The data exchange takes place by means of special data packages or *data strings,* to which they will be referred in the following. These data strings are collections of interrelated data elements having the information associated with the transaction in question. These constitute the common language - the interface - between the client and the data server.

### 5.1 Introduction of data strings

The contents of the data strings depend on the transaction for which they are used. For instance, the contents of the string for B354 and B299 will be entirely different. This is due to the two transactions processing data having entirely different contents of information: the first processes tax statement data - the other processes data concerning orders of batch runs for performing print jobs.

However, all data strings should comply with the same syntax. The syntax is the formal definition of the rules describing how to structure and combine the individual data elements in the data string.

As will be shown below, a data string may consist of a number of data elements. Each data element may typically contain a value and may contain presentation information called attributes. In addition, the data elements contain an indent which is more or less complex. In one end of the scale are simple identifiers such as information without any particular interrelation. In the other end are the combined identifiers which identify the pieces of information having a kind of interrelationship. Information sets packed in data elements in the data strings are, thus, individually identifiable with one more or less complex identifier.

The combined identifiers may be used for separating several occurrences of uniform types of information. One example of several occurrences of uniform types of information could be the collection of interest earned for a number of citizens. Some interest earnings belong to one citizen whereas others belong to another citizen. The information is, thus, said to have a structure.

### 5.2 Fields

As mentioned above, a collection of data elements is included in a data string. Each element may contain one value and optionally a number of identifiers. The value may be displayed in one field on the client and the data string is thus also said to contain a number of *fields.*

The fields describe independent information and may e.g. contain information on the value of a citizen's income taxed at source. A field may furthermore also contain other information on the type, colour, location, prefix, display format, etc. of the field.

It is important to note the difference: the value will typically always follow the field whereas the remaining information is only included in the data string when it is not known by the client or is to be updated. This type of information is called *attributes.* The attributes for the fields may be saved in a local database associated with the individual clients.

When a field value is sent from the data server to the client, it ALWAYS appears together with a field identifier. The field identifier is an unambiguous identification used by the client for a search in the database in order to determine where and how to present the field value. Fields not included in any structure have simple identifiers.

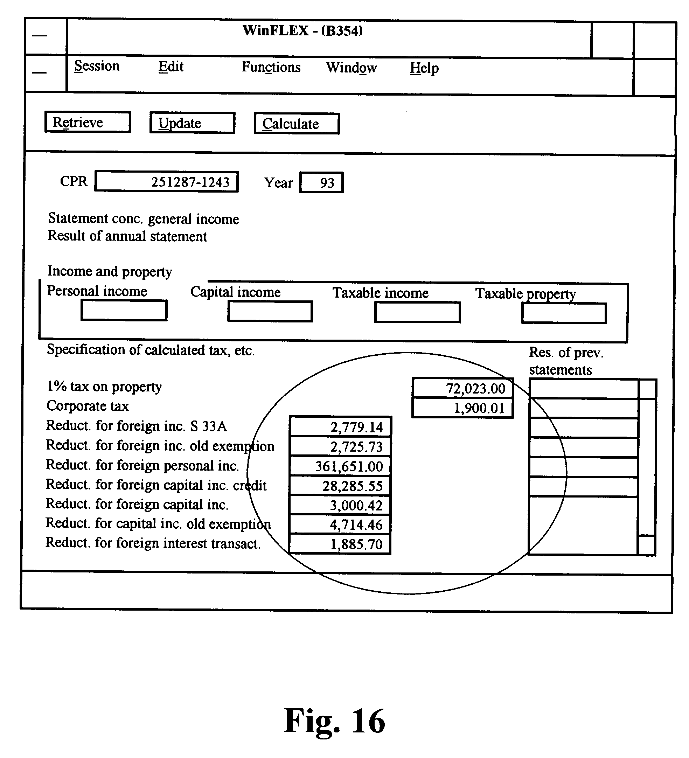

Figure 16 shows an example of a screen display having filled-in fields. It is assumed that the user has filled in the civil registration number with the value 251287-1243 and the year with the value 93 and has received a data string from the data server.

The screen display shown in Figure 16 is filled in incompletely. The purpose is to focus on the filled-in fields. The data basis for the filled-in fields is a section of a larger data string which would have caused the entire screen display to be filled in. The section is as follows:
1713=7202300;1720=190001;1812=277914;1813=272573;1814=361 65100;1815=2828555;1816=300042;1817=471446;1818=188570

It should be noted that the field identifiers shown are merely examples. A description of all the field identifiers should be elaborated. It should be noted that all the field identifiers are simple and that the order is not necessarily as shown in the display.

If a citizen does not receive a reduction for foreign personal income, the data server would have omitted the field identifier 1814 with the associated value 36165100 from the data string. The client's task is in that case to avoid displaying the empty field and the associated prefix.

In this example, the section of the data string only contains field identifiers and field values. In some cases, it may be interesting also to send attributes. The attributes are initially vested in a database associated with the client but they may be overwritten. If, in very specific cases, the data server desires that a prefix for a field be something specific, the data server may in such cases include this attribute in the data string. If field 1812 is to have the prefix "Reduction for foreign income section 99C", the same section of the data string will be as follows:
1713=7202300;1720=190001;1812=277914,Prefix="Reduction- for foreign income section 99C";1813=272573;1814= 36165100;1815=2828555;1816=300042;1817=471446;1818=188570

The attributes are used temporarily in the client and therefore do not overwrite the corresponding attributes in the client's database. The next time the data server sends the same data string, it may omit attributes, and the original prefix found in the client's database is used. It should be noted that the attribute shown merely serves as an example. A description of attributes and of their value options are found in chapter 7, *The Presentation.*

The exemplified fields in the data string may also be described by means of the following EBNF syntax:
**field = field id ["=" value] {"," attribute id "=" value}.**

### 5.3 Fields in groups

Groups are collections of interrelated pieces of information. It should, however, be emphasized that the relations are determined by the client only. In other words, the data server does not determine whether a piece of information is to be grouped or not. The data server, therefore, processes fields in exactly the same way as described in the previous paragraph. When a field value is sent from the data server to the client, it is ALWAYS accompanied by a field identifier. The field identifier is an unambiguous identification used by the client to perform a search in the local database in order to determine where and how to present the field value. It should be noted that a simple identifier is also involved.

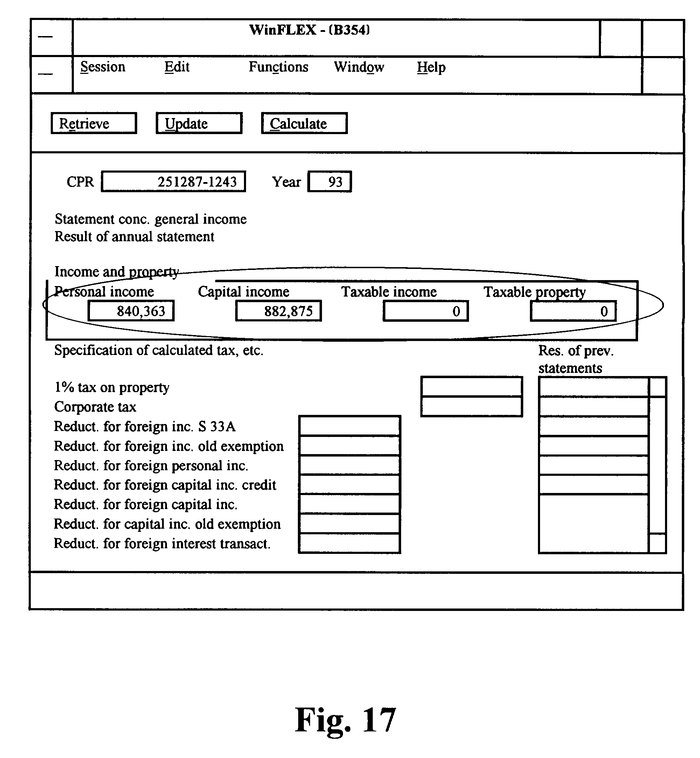

The example from the previous paragraph in Figure 16 is now reused. It is assumed that the user has filled in the civil registration number with the value 251287-1243 and the year with the value 93 and has received a data string from the data server. This is shown in Figure 17 illustrating a screen display with filled in fields in a group.

The screen display shown in Figure 17 is filled in incompletely. The purpose is to focus on the filled-in fields in the group. The data basis for the filled-in fields is a section of a larger data string which would have caused the entire screen to be filled in. The section is as follows:
1550=84036300;1551=88287500;1560=0;1561=0

It should be noted that the field identifiers shown merely serve as examples. A description of all the field identifiers should be elaborated.

There is a difference between the situation in which a data server sends a field value of "0" and the situation in which it sends no value. In this example, the data server sends 1561=0 and the clients should display the value "0". If the data server does not want the client to display the value "0", it may refrain from sending the field identifier 1561 with the corresponding value.

### 5.4 Fields in lists

Like groups, fields are collections of interrelated pieces of information.

In contrast to fields in groups, a certain correlation between the client and the data server exists for fields in lists. The designer has placed a field having a specific identifier in a list in the client because the latter knows that the data server sends several occurrences of fields with the same identifier.

On the other hand, the data server expands the identifier for each occurrence of the field with an index. If the information occurs a number of times in several levels, the data server adds more indexes. Lists of lists of information are involved, for instance a list of citizens, each containing a list of interest earned.

Identifiers, expanded with indexes, are called composite/complex identifiers.

Complex identifiers are obtained by placing simple identifiers having an index value and a ':' in front. In case of several indexes, the simple identifier having all the index values separated by ':' is placed in front. The value for the most significant index is placed in front. In the example with the list of citizens with lists of interest earned, the index controlling the citizen list is the most significant and the index controlling the income list is the least significant.

This may be elucidated by means of an example. The identifier 2:3:3389 indicates the second entry in the above-mentioned citizen list and the third entry in the above income list. 3389 indicates for example that the information concerns interest earned.

This notation form requires for the data server to index all the fields found in several occurrences. However, the fields need not be sent in an index order. An easier way for the data server to choose index is to provide the index with the value of 0 every time. On the other hand, this requires the data server to send fields in the desired order since in that case, the client will insert the fields at the end of the list after the already received fields.

There will only be a point in setting the least significant index to 0 in contrast to the more significant indexes. If lists of lists are involved, this abbreviation does not show to advantage. The abbreviation is useful if only lists in one level are involved as the data server may then entirely omit handling the number of occurrences and only use index 0. The data server, however, should not entirely omit providing an index (0 or not).

In the example below, a list of *results of previous statements* has been compiled. The example serves to illustrate the structure of the lists.

In most programming languages/environments, lists require special handling. The length is typically dynamic, depending on the number of elements included in the list (this number will typically - but not always be variable) and this should be considered when designing requests, allocating data areas, structuring screen displays, etc.

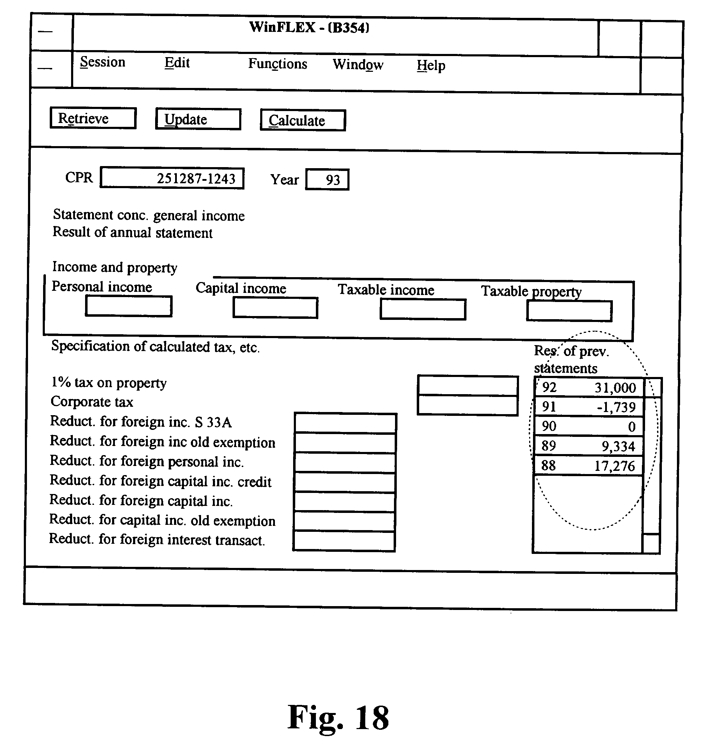

The example from the previous paragraph is reused in Figure 18. It is assumed that the user has filled in the civil registration number with the value 251287-1243 and the year with the value 93 and has received a data string from the data server.

The screen display in Figure 18 is filled in incompletely. The purpose is to focus on the filled-in fields of the list. The data basis for the filled-in fields is a section from a larger data string which would have caused the entire screen display to be filled in. The section is as follows:
0:1001=92;0:4108=3100000;0:1001=91;0:4108=-173900;0:1001= 90;0:4108=0;0:1001=89;0:4108=933400;0:1001=88;0:4108=1727 600

It should be noted that the field identifiers of the example are all complex. The simple field identifiers are placed in the front with an index. In this example, the abbreviation '0:' has been chosen.

When using the abbreviation, it is necessary for the data server to send fields in a certain order. Since the data server in this example sends the field identifier 0:1001 five times and correspondingly sends the field identifier 0:4108 five times, it will be necessary to synchronize the fields belonging together in one list element. The first 0:1001 field sent out is compared by the client with the first 0:4108 field sent out. Correspondingly, the following 0:1001 and 0:4108 fields are combined.

However, if the data server utilizes the other way of indicating indexes, the options are somewhat larger. When assuming that the result for 1990 amounting to DKK 0 should preferably be totally omitted, the same section of the data string would be as follows:
5:1001=88;5:4108=1727600;4:1001=89;4:4108=933400;3:1001=9 0;2:1001=91;2:4108=-173900;1:1001=92;1:4108=3100000

The field with the identifier 3:4108 is not found in this section of the data string. Furthermore, fields are sent with falling indexes in the identifiers.

The exemplified fields in the data string may also be described by means of the following EBNF syntax:
**field = {index ":"} field id ["=" value] {"," attribute id "=" value}.**

### 5.5 Complete data strings

In the previous paragraph, the sub-component from which the data string is constructed has bee described. Below follows a description of the contents of a complete data string.

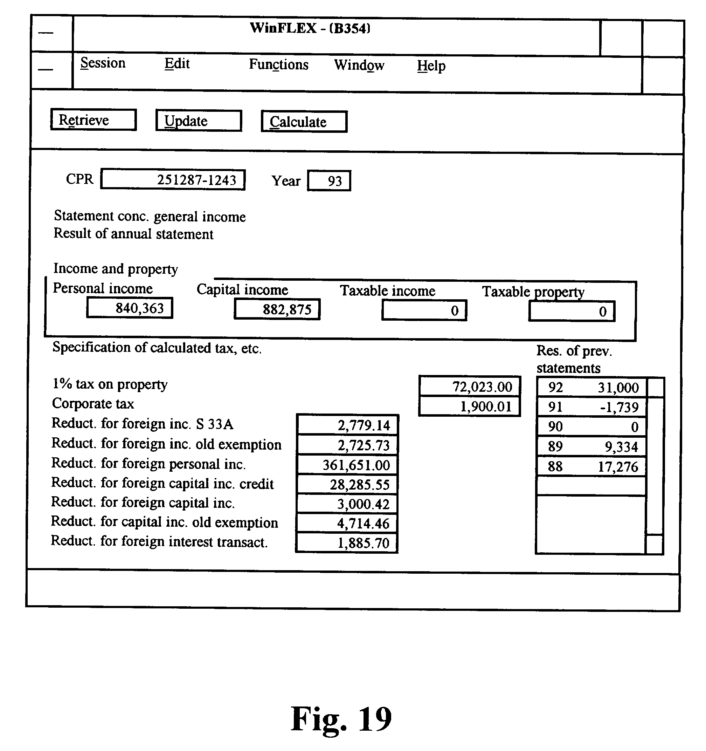

Figure 19 shows a screen display filled in with a complete data string. Said screen display is now entirely filled in. The purpose is to provide an overview of the three previous examples. The data basis for the filled-in screen display is a complete data string having the following contents:
B354!1713=7202300;1720=190001;1812=277914;1813=272573;181 4=36165100;1815=2828555;1816=300042;1817=471446;1818=1885 70;1550=84036300;1551=88287500;1560=0;1561=0;0:1001=92;0: 4108=3100000;0:1001=91;0:4108=-173900;0:1001=90;0:4108=0; 0:1001=89;0:4108=933400;0:1001=88;0:4108=1727600#

It should be noted that the data string starts with the name of the data server with a postpositive exclamation mark ("B354!"). The purpose is to allow the client to identify the data string. A version code stating the version number of the data server may also placed at the beginning of the data string but is so far optional. As the end character, a hatch mark ("#") is used.

### 5.6 Fields having the same identifier

In certain cases, a need may in principle exist for attaching different values to fields having the same identifier. This may for instance be the case if it is desired to compare data from two spouses in a profile. To such fields, a further identification known by the data server may be attached so as to be able to separate them from each other. Failing this, the same value would occur in both fields.

Correlation between the client and the data server may exist for such fields, as the designer places several fields with the same identifier in the client but simultaneously adds different position numbers to each field.

The data server may then send fields with identifiers unambiguously stating the position to be used. If a data server, for instance, sends uniform information on a married couple, it will be necessary to separate the man's information from that of the woman. This is performed using *position numbers.*

Identifiers expanded with position numbers are called *expanded identifiers.*

Expanded identifiers are obtained by postpositioning simple identifiers with an '.' and an integer. In practice, this expansion of the identifiers means that the identifiers become even further unambiguous if the concept of degrees of unambiguity was involved. On the face of it, it would seem that the forming of more and totally unambiguous identifiers, for instance 4108M and 4108K for men and women, respectively, would be necessary. However, it would not be appropriate to differentiate to that extent. Such differentiation would only cause larger overheads in the administration of field descriptions and would require that the data servers become unnecessarily specific.

One example of a section of a data string containing fields having expanded identifiers is as follows:
1212.1=200000;1212.2=180000;1278.1=2500;1278.2=3000

The exemplified fields in the data string may also be described by means of the EBNF syntax:
**field = field id ["." position] ["=" value] {"," attribute id "=" value}.**

If no reference is made to the expanded identifier in the profile, but only to the identifier itself, all values received from the data server will be placed in this identifier. In practice, this means that only the most recently received field from the data server will be displayed.

### 5.7 Complex identifiers

There are, of course, no obstacles to the fact that identifiers may be both expanded and complex identifiers. Only, this means that the data string can contain lists of uniform fields for one citizen and correspondingly for another citizen.

Fields having such "complex" identifiers may hereinafter be described by means of the following EBNF syntax:
**field = (index ":") field id ["." position] ["=" value] {"," attribute id "=" value}.**

### 5.8 Syntax

On the basis of the examples shown, the contents of a data string has been described, and concurrent herewith the syntax itself has been dealt with. This has also applied to the syntax for fields using *simple* identifiers, *expanded* identifiers, *complex* identifiers. However, the definition and the description of so-called *control information* to be used when identifying the individual data string still remain:

The data string is prefixed with 2 pieces of information: a transaction code and a - for the present optional - version identifier useful in connection with updates/download of the local field and screen display database on the FLEX client.

The data string ends with a special mark (in this case "#") in order to indicate the end of data. The full syntax for the contents of a data string is hereinafter - in EBNF notation - as follows:
**data string = trans code "," func id ["," error code]["," status] ["," version] ":" element list "#".**
**trans code = id .**
**func-id = id .**
**element list = field {";" field} .**
**field = {index ":") field id ["." position] ["=" value ] {"," attribute id "=" value} .**
**field id = id .**
**index = integer . // index in list structure**
**position = integer . // position in order**
**attribute id = id .**
**id = (letter | figure) {letter | figure} .**
**value = {s mark} // a string of characters**
**error code = TBD . // to be defined**
**status = TBD . // to be defined**
**version = TBD . // to be defined**
**integer = figure {figure} .**
**s mark = all marks except comma (",") and semicolon (";") used as separator marks for elements, value pairs, respectively, as well as hatch mark ("#") which**
   **is used as the end character.**
**figure = 0 | 1 | 2 | 3 | 4 | 5 | 6 | 7 | 8 | 9**
**letter = A | B | ... | Z | a | b | ... | z |**

In the EBNF are used different separator/division marks: *less than, larger than, colon, equals, comma, semicolon, full stop and hatch mark* or symbols: "<", ">", ":", "=", ",", ";", "." and "#". These have been chosen herein to make the syntax and the examples more easy to read. It should be noted in this connection that the data server constructors need not ponder further on the choice of the above signs. The data server constructors are not to enter the separation marks themselves. They may instead be offered functions constructing a complete data string on the basis of the transferred parameters.

The above syntax does not describe the meaning of data in a data string or the fields or attributes present.

### 6. User dialogue with FLEX

In order to provide an overview of the different components and sub-systems in FLEX, the present chapter will investigate a more comprehensive example. The example describes a user's dialogue with FLEX, i.e. what happens - both on the client and on the Server - from the point in time when the user logs on until he terminates the FLEX client and logs off.

The example is described in several items/sub-paragraphs and - when necessary - illustrated by means of a number of simplified Windows displays and scenarios.

### 6.1 Starting the client

The user starts WinFLEX from a group in Programme Control. This is done in an ordinary Windows manner by double-clicking a WinFLEX icon.

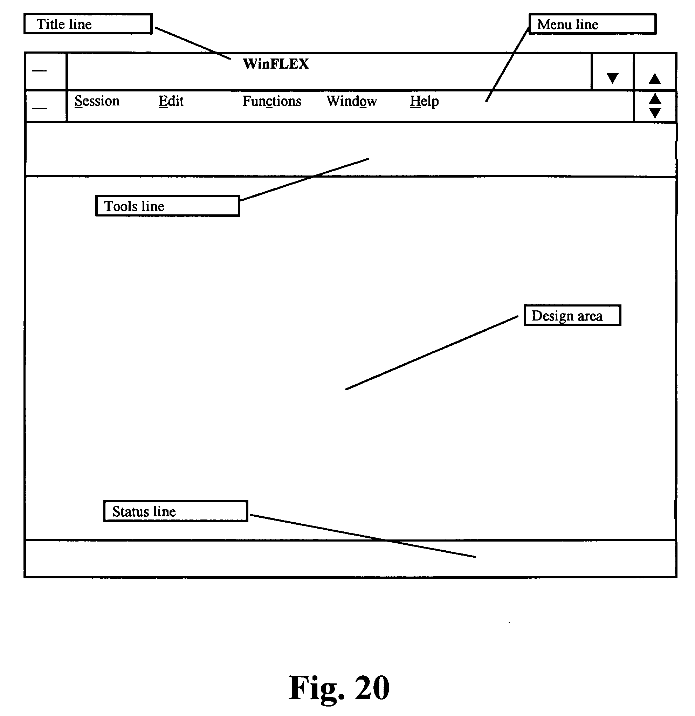

WinFLEX now starts and the screen display shown in Figure 20 can be seen by the user. As can be seen, WinFLEX looks like an ordinary Windows application. When starting WinFLEX, the display is empty. WinFLEX is an MDI application which in this case means that several displays may be open at the same time completed with data from the mainframe. A B354 application in one window and a B270 in another may e.g. be performed simultaneously.

### 6.2 Starting the client - logon

When the client is started towards the mainframe, it first logs itself onto the mainframe and then collects information on the user on the LOS system.

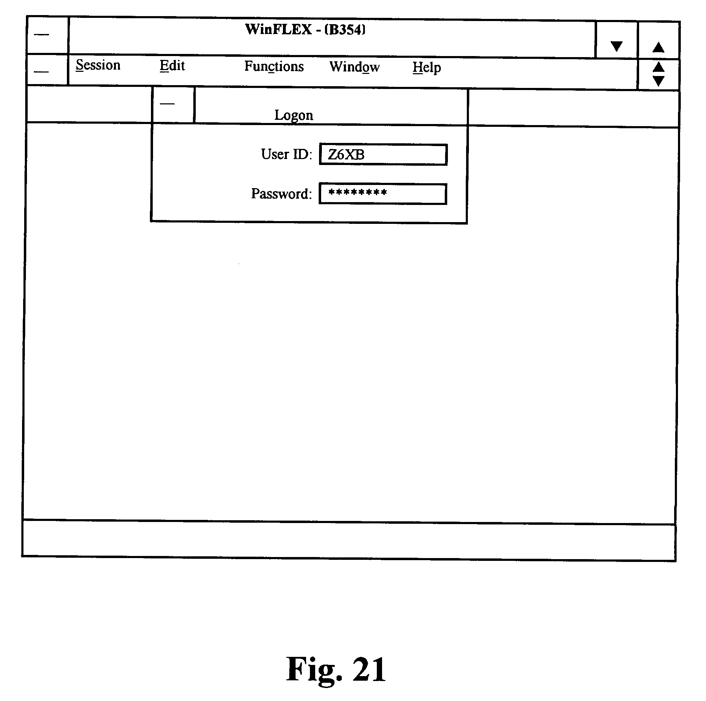

The logon display is automatically shown in the WinFLEX display just after start up as shown in Figure 21.

When the user has entered the user id and the password, logon to the mainframe is made via the normal Logon display. The existing security functions are thereby used. Upon logon, the existing LOS system is called and LOS information of the user are thereby obtained. Such information is, inter alia, LOS user id, LOS department id and LOS municipality id.

Upon obtaining the LOS information, this information is returned to the client to be stored locally. The information is to be used for selecting the FLEX data server programmes for which the user in question has profiles.

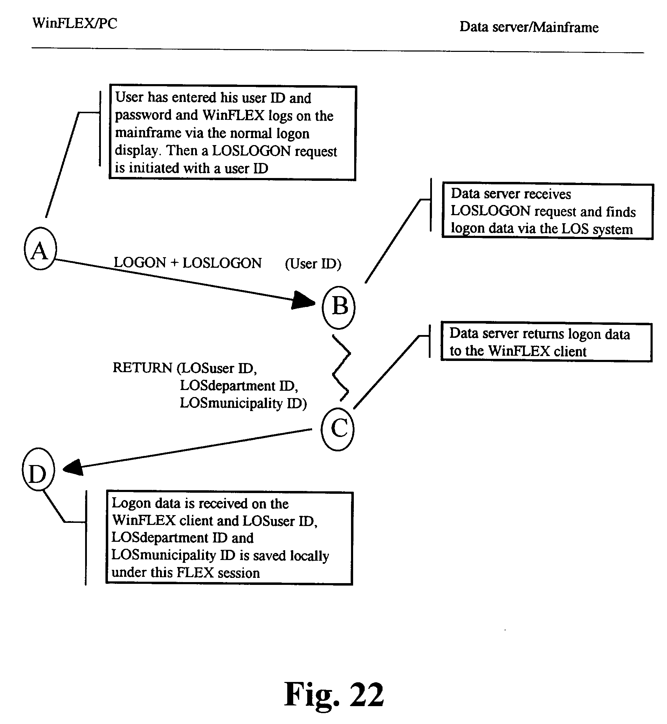

The communication between the client and the data server in connection with the logon procedure may be illustrated as shown in Figure 22.

### 6.3 Selection of application

On the basis of the information from the LOS system, the client may now select the FLEX programmes (profiles) to which the user in question has no access. This is not an actual security function but a function implemented in order to make the system as user-friendly as possible. The user is only to see the profiles used in his or her municipality, his or her department or those tailored for use by the user himself or herself.

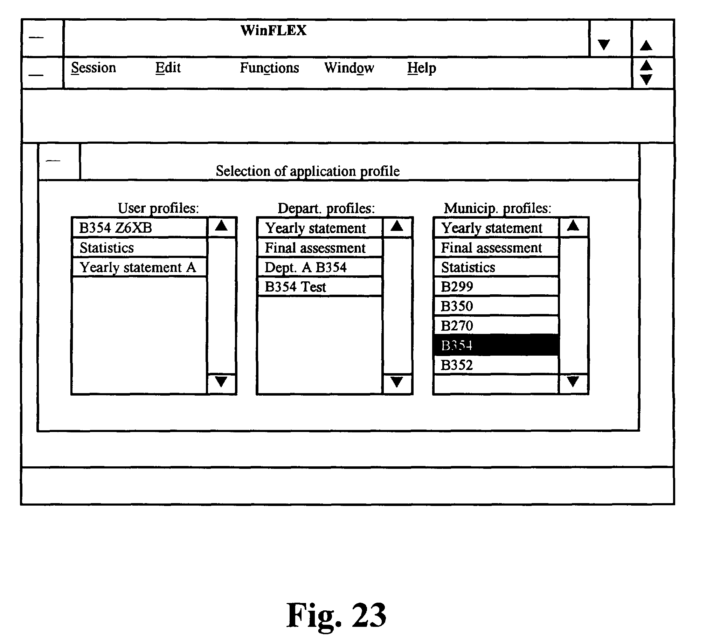

The user's options with respect to the performable application are now presented to the user in the form of a screen display with 3 list boxes: one containing his tailored application profiles, one containing those of the department, and finally one containing the application profiles of the municipality, see Figure 23.

### 6.4 Initialization of application

As an example it is assumed that the user selects B354 from the list containing the application profiles of the municipality as indicated above. This is done by double-clicking B354 in the appropriate list box.

By this selection, the user has told the client that he wishes to perform B354 with the standard profile for B354 used by his municipality.

The client then finds the appropriate profile in the local database and prepares for displaying it in a window on the screen. The profile only contains information on *the presentation logic* in B354.

The client does not know the *data* of the programme - they are found via the data server on the mainframe. This will be described in a subsequent paragraph.

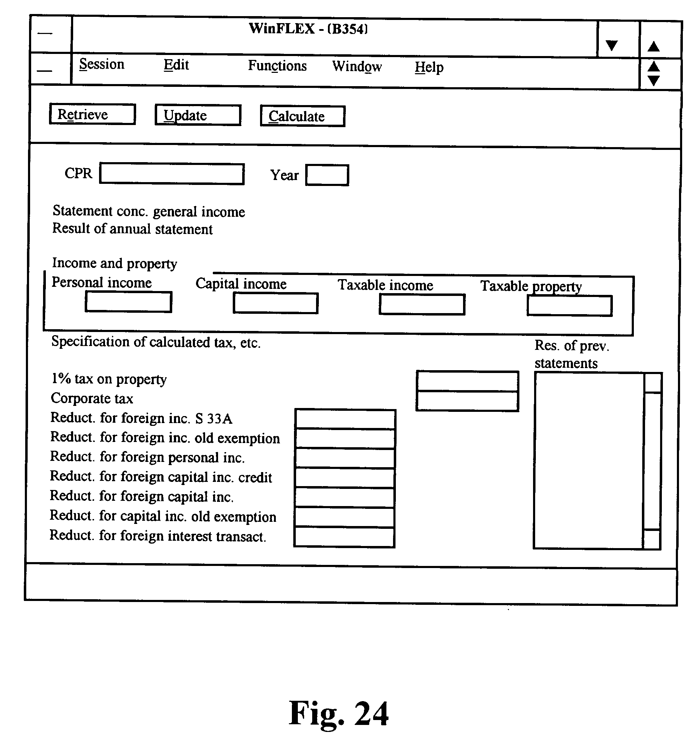

A description will first be made of what the client can display BEFORE data has been obtained via the mainframe, see Figure 24 which shows the start up of WinFLEX with the application profile for B354. As can be seen, the client has some knowledge of B354. The client has structured the screen display with fields for *CPR* (civil registration number), *YEAR, Income and Property, Property Tax,* etc.

The information on press keys or buttons in the screen display, the size of the fields, the prefixes, formatting, mutual location, etc. has been retrieved via the local database. This information is collectively termed an application profile because it deals with the presentation of an application under FLEX.

In the B354 profile, the following three press keys or buttons are included: *Retrieve, Update* and *Calculate.* The keys *Update* and Calculate cannot be used yet. A description of how these are made available and used in the B354 application will follow below.

In addition to the press keys or buttons, the screen display may have a number of data fields. *CPR* (civil registration number) and *YEAR* are input fields used when data is to be obtained from the data server on the mainframe within short. This is indicated in the screen display by underligning the prefix.

*Personal inc., Unearned income, Taxable income, Taxable property,* etc. up to and including the field *Reduction for foreign interest transact.,* are *output fields* used for displaying data received from the data server or - for some of the fields - for updating data via the data server. It should be noted that the fields have not been completed with values. The reason for this is that the client has not obtained data from the mainframe.

In addition to press keys or buttons and data fields, the screen display - like many other screen displays under Windows - may have a title line, a menu line and a status line. These are used and act in the same way as in other Windows applications.

### 6.5 The filling in of fields

The B354 application used as an example herein has two input fields: *CPR* (civil registration number) and *YEAR.* As is the case with the existing B354, these fields should be filled in and sent to the mainframe. They act as selection criteria for the data to which the user desires to have access.

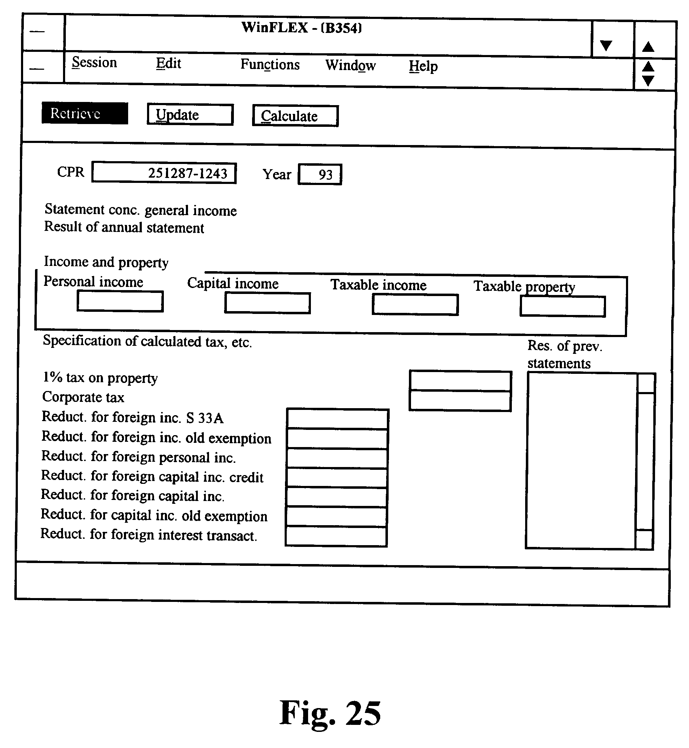

In the example, the user fills in the two fields. Then he presses the key *Retrieve* and a transaction is sent to the mainframe for further processing. The screen display appears as is shown in Figure 25 when the user presses the *Retrieve* key.

### 6.6 Request to the data server

As a result of the user pressing the *Retrieve* key, data is to be obtained from the data server on the mainframe.

First, the client establishes a SELECT transaction. This transaction consists of the transaction code "B354", the function identifier "SELECT" due to the request being a SELECT type request, and the delimiting fields *CPR* (civil registration number) and *YEAR* including their contents. The entire string is ends with a hatch mark ("#") used as the end character:
"B354,SELECT:4000=2512871243;99=93#"

The transaction is now sent to the data server on the mainframe through a communication module in the client.

### 6.7 Data server processing of a request

On the mainframe, the transaction is received by the B354 programme which is the existing B354 programme rewritten to a FLEX data server. A totally new programme has optionally been written in order not to interfere with the existing B354 production environment.

The new B354 Data Server is capable of processing the received transaction since the constructor of the data server and the designer of B354 on the client have coordinated the parameters to be sent with a 'SELECT'.

The data server then finds the requested data - from CPR (civil registration number) and YEAR - and returns the data to the client. Prior hereto data has been expanded with various status information from the data server and by an error code stating how the retrieving of data proceeded:
"B354,SELECT,OK:1713=7202300;1720=190001;1812=277914;1813=272 573;1814=36165100;1815=2828555;1816=300042;1817=471446;1818=1 88570;1550=84036300;1551=88287500;1560=0;
1561=0;FUNC=UPDATE;FUNC=CALCULATE#"

### 6.8 Reply to request to the data server

The client awaits a reply to its SELECT request. When the data server has finished its processing of the transaction, it returns the result to the client. Not until then will the client be able to continue. The communication between the client and the server is in other words synchronous.

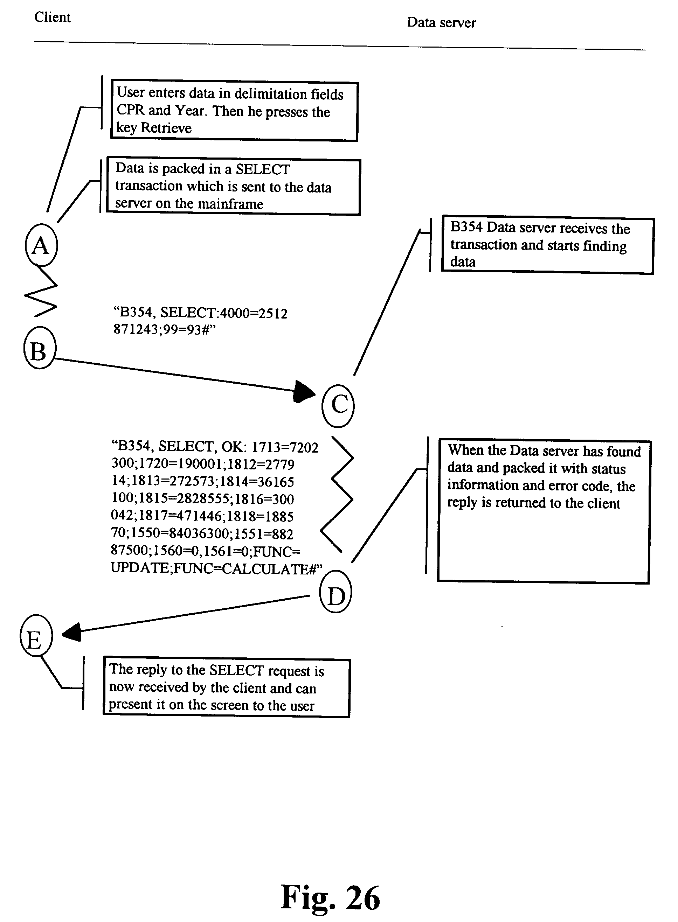

The entire scenario from the original request from the client to the data server, the processing of the transaction in the data server and the returning of a reply to the client is illustrated in the example shown in Figure 26.

### 6.9 Presentation of output fields

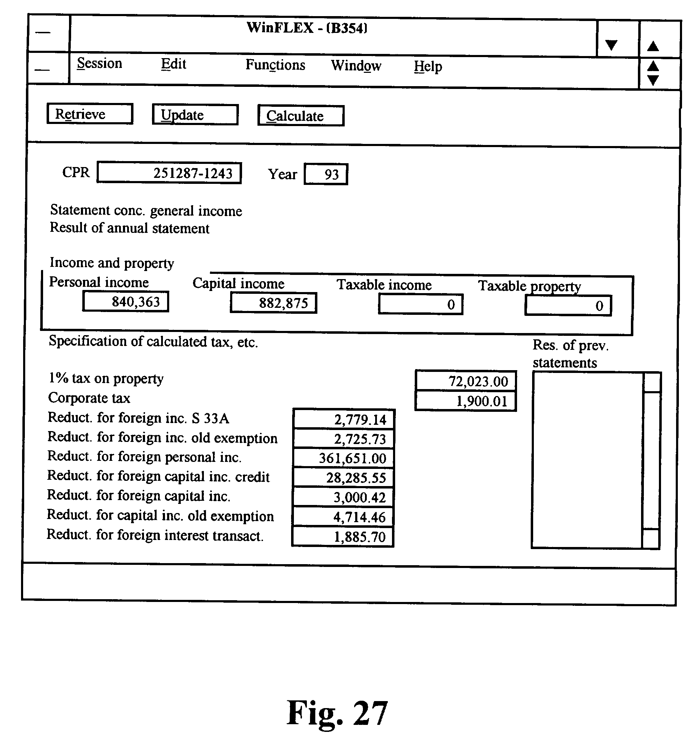

Once the data has been returned from the request, the data may be displayed in the B354 application profile on the screen as shown in Figure 27.

The fields containing *Income* and *property* as well as the fields containing *Property tax, Corporate* tax and different *Reduction* ... have now been completed with the data returned from the data server.

It should also be noted that the press keys *Update* and *Calculate* are now accessible. The data server on the mainframe has told the client that these keys may now be used. This makes sense since the screen now contains data that can be updated and fields that can be calculated.

The list box with *Result of previous statements* has not been filled in as the data fields in question were not returned form the data server.

### 6.10 Further requests to the data server

If the scenario is continued, where the last paragraph ended, it may be envisaged that the user now presses Calculate since it is desired that the data server calculates and returns the information on *Result of previous statements.*

The communication with the data server is the same as that of the previous example. However, the transaction now includes a new function identifier, CALCULATE, which indicates the function of that particular transaction:
"B354,CALCULATE:4000=2512871243;99=93#"

The result returned from the data server is also constructed as shown before. However, it should be noted that the data fields returned are now the fields occurring several times. This is why they have also been provided with an index stating the occurrence in question:
"B354,CALCULATE,OK:1:1001=92;1:4108=3100000;2:1001=91;2:4 108=-173900;3:1001=90;3:4108=0;4:1001=89;4:4108=933400;5: 1001=88;5:4108=1727600#"

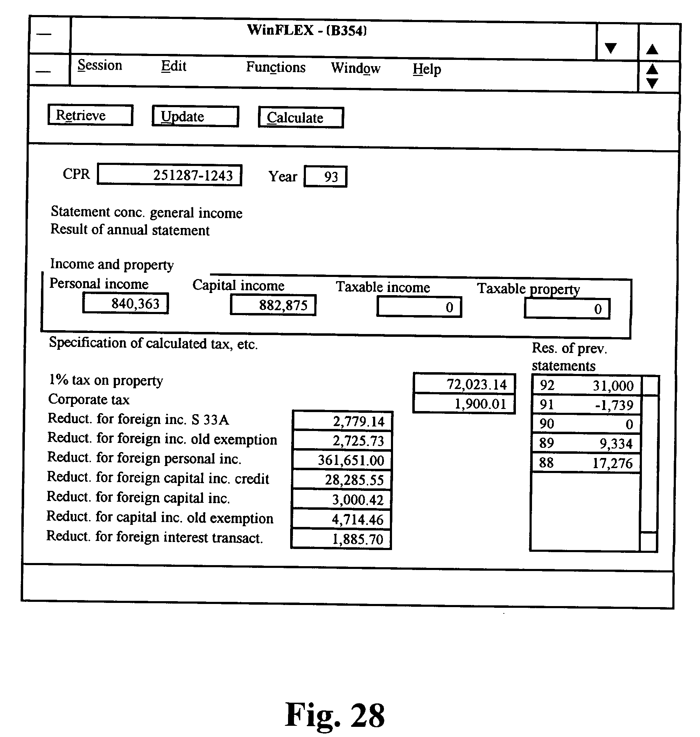

The example in Figure 28 shows the screen display after calculating and returning the data fields in the list box from the data server.

### 6.11 Termination of a session - logoff

Using a few examples, it has now been shown how the user's dialogue in the FLEX system takes place. This is ended by showing how the dialogue is terminated.

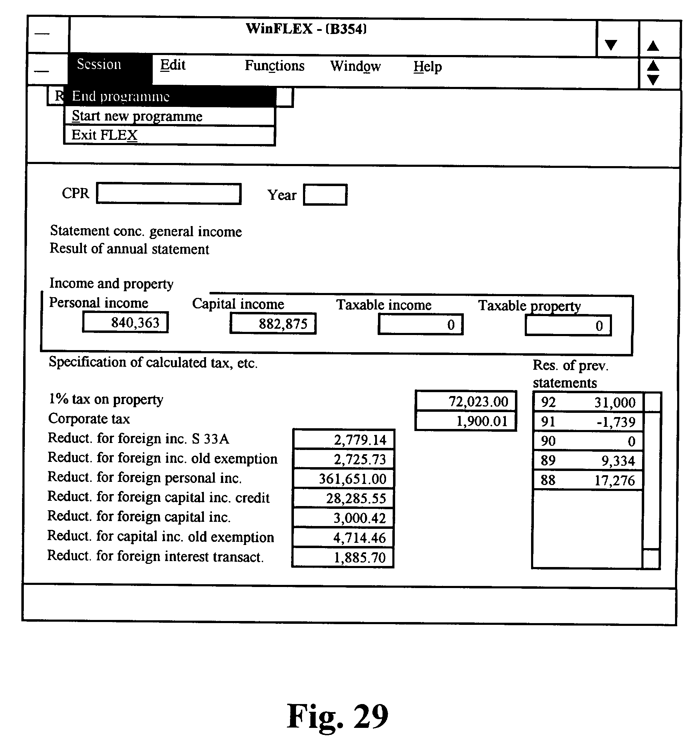

If it is desired to terminate a FLEX programme, such termination may take place by selecting *End programme* from the menu *Session.* If it is desired to leave the client entirely, *Exit FLEX* from the same menu may also be selected. The client itself will then perform logoff from the mainframe. On the screen, this appears as shown in Figure 29.

### 7. The presentation

The client's task is to present the information delivered from the data server.

### 7.1 Presentation strategies

The client presents information using parameter controlled mechanisms. The mechanisms are termed strategies and the parameters are termed attributes. The attributes are generally described in the following paragraph.

The main task of the client is to offer a collection of strategies and attributes capable of providing the designers and the users with the presentation options desired when designing or correcting their programmes. As a point of departure, FLEX should have a minimum of presentation strategies sufficiently meeting the demands. New strategies may be added hereto and existing strategies may be elaborated by adding new attributes. The philosophy of FLEX is in that respect highly scalable.

### 7.2 Attributes

The presentation of information to the client is controlled by attributes. A field, group or list is associated with a set of attributes controlling that particular element.

One example of an attribute is **Layout**. This attribute controls the manner in which fields are placed in groups or lists.

Another typical example is the attribute **Show**. This attribute may assume one of the following values: 'Always', 'Never', or 'Filled-in'. Using this attribute, the user may control the extent to which he desires to see different information. In this context, it is important to explain that commands such as 'Show only if value >= 2000' will not immediately be made available. However, there are no objections to the data server omitting to send the field value in question to the client if the value is below 2000. This type of rules (business rules) apply to the data server.

The set of relevant attributes varies from fields over lists to groups.

Some attributes are static. This means that they cannot be modified from profile to profile. Other attributes are dynamic. This, however, means that they may be modified from profile to profile. Some of the dynamic attributes may even be modified by the individual user who performs a FLEX programme. The attributes may in this way also be changed over time.

The static attributes are vested in the field table in the client's database. The dynamic attributes are vested in the screen field table in the client's database. The attributes in the field table must be filled in when a field is defined in this table. On the other hand, the attributes in the screen field table are not filled in until a FLEX programme is designed or until the FLEX programme is adapted.

The following paragraphs deal with a number of attributes. The set of values for each attribute will be described and the mutual effects of the attributes will be explained. An example will never be able to explain the options existing in the client of designing a good profile for a FLEX programme. Instead, an overview of the attributes and their set of values will provide the best insight into the options.

### 7.2.1 Field_type

The field type is static.

The field type may assume one of the following values:
Group, List, Amount, Number, Text, Date, Civil registration number, Municipality, Code

Groups and Lists are container fields. Container fields do not have values like other fields. On the other hand, they may contain other fields. Groups contain one occurrence of each of their contained fields whereas lists contain several occurrences of each of their contained fields.

The other types of fields are 'ordinary' fields containing values. FLEX differentiates between different types of fields to allow the user to edit the fields differently and to perform different input tests on the fields. A field of the type civil registration number will typically be edited with an automatic hyphen an be input tested with a module 11 check. A municipality will on the other hand typically be edited or selected from a combo box. There is, of course, a difference between the clients' editing options in Windows compared with 3270.

There is no standard value. The designer explicitly chooses a type when the field is established.

### 7.2.2 Choice_of_components

The choice of components is dynamic.

This attribute may be assigned one, two or three values simultaneously. The values are OR'ed together. The set of values is as follows:
Prefix, Value, Suffix

As a standard, all three values are set for this attribute. But the omission of both the prefix or the suffix could be useful. In that case, the attribute is simply assigned the value 'Value'. If the values 'Prefix' or 'Suffix' are omitted, the attributes **Selection/Choice_of_prefix** or **Choice_of_suffix** are ignored.

The standard value is 'Prefix' + 'Value' + 'Suffix'.

### 7.2.3 Prefix_long

The long prefix is static.

The long prefix may assume a text value with a maximum length of 78 characters. This prefix is only presented together with the value of the field if the attribute **Choice_of_prefix** is set to 'Long' and the attribute **Choice_of_components** is set to 'Prefix'.

### 7.2.4 Prefix_medium

The medium prefix is static.

The medium prefix may assume a text value with a maximum length of 50 characters. This prefix is only presented together with the value of the field if the attribute **Choice_of_prefix** is set to 'Medium' and the attribute **Choice_of_components** is set to 'Prefix'.

### 7.2.5 Prefix_short

The short prefix is static.

The short prefix may assume a text value with a maximum length of 20 characters. This prefix is only presented together with the value of the field if the attribute **Choice_of_prefix** is set to 'Short' and the attribute **Choice_of_components** is set to 'Prefix'.

### 7.2.6 Choice_of_prefix

The choice of the prefix is dynamic.

This attribute may assume one of the following values:
Long, Medium, Short

Depending on the value assigned to this attribute, one of the three possible prefixes for the field is shown. The prefix is only shown if the attribute **Choice_of_components** is set to 'Prefix'.

The standard value is 'Long'.

### 7.2.7 Suffix_long

The long suffix is static.

The long suffix may assume a text value with a maximum length of 78 characters. This suffix is only presented together with the value of the field if the attribute **Choice_of-suffix** is set to 'Long' and the attribute **Choice_of_components** is set to 'Suffix'.

### 7.2.8 Suffix_medium

The medium suffix is static.

The medium suffix may assume a text value with a maximum length of 50 characters. This suffix is only presented together with the value of the field if the attribute **Choice_of_suffix** is set to 'Medium' and the attribute **Choice_of_components** is set to 'Suffix'.

### 7.2.9 Suffix_short

The short suffix is static.

The short suffix may assume a text value with a maximum length of 20 characters. This suffix is only presented together with the value of the field if the attribute **Choice_of_suffix** is set to 'Short' and the attribute **Choice_of_components** is set to 'Suffix'.

### 7.2.10 Choice_of_suffix

The choice of suffix is dynamic.

This attribute may assume one of the following values:
Long, Medium, Short

Depending on the value assigned to this attribute, one of the three possible suffix for the field is displayed. The suffix is only displayed if the attribute **Choice_of_components** is set to 'Suffix'.

The standard value is 'Long'.

### 7.2.11 Help_text

The help text is static.

The help text describes the general use of the field in short terms. The help text is displayed in the client's status line when the field is in focus.

### 7.2.12 Layout

The layout is dynamic.

The layout contributes to determining the location of fields in groups or lists. This attribute is consequently only relevant for groups and lists.

This attribute may assume one of the following values:
Physical, Vertical_Dynamic, Dynamic with the associated effects:
- 'Physical' leads to column and row attributes being used for locating the fields. The client has no influence on the location.
- 'Vertical_Dynamic' leads to column attributes being used for locating the fields. The client has no influence on the horizontal location of fields. 'Vertical_Dynamic' also leads to the order of the fields being used for locating the fields in relation to each other in rows. The client, thus, controls the vertical location of fields. Therefore, the client is able to utilize empty positions by 'pulling' fields up and on the other hand and create more positions by 'pushing' fields down.
- 'Dynamic' leads to the order of the fields being used for locating the fields in relation to each other. The client controls both the vertical and the horizontal location of fields. The client is consequently able to exploit the area as optimally as possible and may 'pull' fields and 'push' fields both vertically and horizontally.

The standard value is 'Vertical_Dynamic'.

### 7.2.13 Field_column

The field column is dynamic.

The field column is used for indicating the horizontal location of a field. This applies to the location of the field itself and not of the prefix. If the attribute **Layout** on the container is assigned the value 'Dynamic', this attribute is ignored. In the 3270 client, the field column is character-based; in the Windows client, the field column is based on *units*.

There is no standard value for this attribute. When the field is designed, the designer implicitly states a value.

### 7.2.14 Field_row

The field row is dynamic.

The field row is used for stating the vertical location of a field. This applies to the location of the field itself and not of the prefix. If the attribute **Layout** on the container is assigned the value 'Vertical_Dynamic' or 'Dynamic', this attribute is ignored. In the 3270 client, the field row is character based; in the Windows client, the field row is based on *units.*

There is no standard value for this attribute. When the field is designed, the designer implicitly states a value.

### 7.2.15 Field_width

The field width is dynamic.

The field width is used for stating the width of the field. In the 3270 client, the field width is character based; in the Windows client, the field width is based on *units.*

There is no standard value for this attribute. When the field is designed, the designer implicitly states a value.

### 7.2.16 Field_height

The field height is dynamic.

The field height is used for stating the height of the field. In the 3270 client, the field height is character based; in the Windows client, the field height is based on *units.*

The field height is only relevant for groups and lists.

There is no standard value for this attribute. When the field is established, the designer implicitly states a value.

### 7.2.17 Prefix_column

The prefix column is dynamic.

The prefix column is used for stating the horizontal location of the prefix of the field. If the attribute **Layout** on the container is assigned the value 'Physical' or 'Vertical_Dynamic', the location is absolute. Otherwise, the location is **relative to** the location of the field.

The absolute location indicates the beginning of the prefix.

The relative location is calculated dependently of the value in the attribute **Prefix_location**:
- If the value is 'Left_Justified', the relative location of the prefix is calculated as a negative offset to the column. The location designates the beginning of the prefix.
- If the value is 'Right_Justified', the relative location of the prefix is calculated as a negative offset to the field column. The location designates the end of the prefix.
- If the value is 'InFrontOf' or 'Above', the attribute **Prefix_column** is ignored. The client itself determines the location of the prefix.

The standard value is 0.

### 7.2.18 Prefix_row

The prefix row is dynamic.

The prefix row is used for indicating the vertical location of the prefix of the field. If the attribute **Layout** on the container is assigned the value 'Physical', the location is absolute. Otherwise, the location is relative to the location of the field.

The relative location is calculated depending on the value in the attribute **Prefix_location**:
- If the value is 'InFrontOf' or 'Above', the attribute **Prefix_row** is ignored. The client itself determines the location of the prefix.
- If the value is 'Left_Justified' or 'Right_Justified', the attribute **Prefix_row**, however, is not ignored. Instead, the relative location of the prefix is calculated as a negative offset to the field row.

The standard value is 0.

### 7.2.19 Prefix_location

The location of the prefix is dynamic.

This attribute may assume one of the following values:
Left_Justified, Right_Justified, InFrontOf, Above with the associated effects:
- 'Left_Justified' leads to the beginning of the prefix being located on a negative offset from the field column and a negative offset from the field row. The negative offsets are found in the attributes **Prefix_column** and **Prefix_row**.
- 'Right_Justified' leads to the end of the prefix being located on a negative offset from the field column and a negative offset from the field row. The negative offsets are found in the attributes **Prefix_column** and **Prefix_row**.
- 'InFrontOf' leads to the prefix being located in a right_justified manner in front of the field itself. The client determines where.
- 'Above' leads to the prefix being located in a left_justified manner above the field itself. The client determines where.

This attribute is totally ignored if the attribute **Layout** on the container is assigned the value 'Physical' or 'Vertical_Dynamic'.

The standard value is 'InFrontOf'. For groups and lists, this attribute may assume only the value 'Above'.

### 7.2.20 Suffix_column

The suffix column is dynamic.

The suffix column is used for indicating the horizontal location of the suffix of the field. If the attribute **Layout** on the container is assigned the value 'Physical' or 'Vertical_Dynamic', the location is absolute. Otherwise, the location is relative to the location of the field.

The absolute location indicates the beginning of the suffix.

The relative location is calculated depending on the value in the attribute **Suffix_location**:
- If the value is 'Left_Justified', the relative location of the suffix is calculated as a positive offset for the end of the field. The location designates the beginning of the suffix.
- If the value is 'Right_Justified', the relative location of the prefix is calculated as a positive offset to the field column. The location indicates the end of the suffix.
- If the value is 'Behind' or 'Below', the attribute **Suffix_column** is ignored. The client itself determines the location of the prefix.

The standard value is 0.

### 7.2.21 Suffix_row

The suffix row is dynamic.

The suffix row is used in order to indicate the vertical location of the suffix of the field. If the attribute **Layout** on the container is assigned the value 'Physical', the location is absolute. Otherwise, the location is relative to the location of the field.

The relative location is calculated depending on the value in the attribute **suffix_location**:
- If the value is 'Behind' or 'Below', the attribute **Prefix_row** is ignored. The client itself determines the location of the prefix.
- If the value is 'Left_Justified' or 'Right_Justified', the **Prefix_row**, however, is not ignored. Instead, the relative location of the prefix is calculated as a positive offset to the field row.

The standard value is 0.

### 7.2.22 Suffix_location

The location of the suffix is dynamic.

This attribute may assume one of the following values:
Left_Justified, Right_Justified, Behind, Below with the associated effects:
- 'Left_Justified' leads to the location of the beginning of the suffix on a positive offset from the end of the field and a positive offset from the field row. The positive offsets are found in the attributes **Suffix_column** and **Suffix_row**.
- 'Right_Justified' leads to the location of the end of the suffix on a positive offset from the field column and a positive offset from the field row. The positive offsets are found in the attributes **Suffix_column** and **Suffix_row**.
- 'Behind' leads to the left-justified location of the suffix behind the field itself. The client determines where.
- 'Below' leads to the right-justified location of the suffix below the field itself. The client determines where.

This attribute is totally ignored if the attribute **Layout** is assigned the value 'Physical' or 'Vertical_Dynamic'.

The standard value is 'Behind'. For groups and lists, this attribute can assume only the value 'Below'.

### 7.2.23 Order

The order is dynamic.

The order indicates a mutual order between fields in the same group or list. The order is used by the client in order to place the fields in relation to each other if the attribute **Layout** assumes one of the values 'Vertical_Dynamic' or 'Dynamic'. If the same attribute assumes the value 'Physical', the order is not used for locating the fields.

The order is ALWAYS used for determining an inputting order for the fields, independent of the layout.

There is no standard value for this attribute. When the field is established, the attribute is assigned a consecutive value.

### 7.2.24 Display

The attribute Display is dynamic.

The attribute Display is used for determining whether a field with or without contents is to be displayed. The attribute may assume the following values:
Always, Filled-in, Never
with the associated effects:
- 'Always' leads to the fact that the field is always displayed even though the data server does not send a value to the field. With respect to groups and lists, these are always displayed, whether some of the included fields are displayed or not.
- 'Filled-in' leads to the fact that the field is only displayed if the data server sends a value to the field. Otherwise, the field is not displayed. With respect to groups and lists, these are only displayed if some of the included fields are displayed. Otherwise, they are not displayed.
- 'Never' leads to the fact that the field is never displayed, whether the data server sends a value to the field or not. With respect to groups and lists, these are never displayed irrespective of some of the included fields normally being displayed. If a group or a list is not displayed, the included fields are not shown either.

The standard value is 'Filled-in'.

### 7.2.25 State

The state is dynamic.

The state determines how to display a group or a list. The state only has an effect if the field is displayed, i.e. that the attribute **Display** assumes the values 'Always' or 'Filled-in' and that the data server sends a value to the field for the latter value. The attribute **State** may assume the following values:
Open, Closed, Static
with the associated effects:
- 'Open' leads to the full size display of the group or the list. An icon is also displayed which indicates that the state is open. If the user clicks the icon, the state will change to closed.
- 'Closed' leads to the reduced size display of the group or the list. An icon is also displayed which indicates that the state is closed. If the user clicks the icon, the state will change to open.
- 'Static' leads to the full size display of the group or the list. No icon is displayed and the state, therefore, cannot be changed by the user.

The standard value is 'Open'.

### 7.2.26 Field_active

The attribute Field_active is dynamic.

The attribute Field_active may assume the following values
Input, Output, System
with the associated effects:
- 'Input' leads to the field displaying a modifiable value. The field is sent to the data server with each transaction.
- 'Output' leads to the field displaying a value which CANNOT be modified. The field is NOT sent to the data server.
- 'System' leads to non-display of the field. Instead, the field is sent to the data server with each transaction.

The standard value is 'Output'.

### 7.2.27 Presentation

The presentation is dynamic.

For each type of fields, there is a set of presentation options. These options are described with values simultaneously assignable to this attribute. The values are OR'ed together. For the following types of fields, the following presentation options exist:
- Amount: Thousand_Separator, Whole number_Danish Kroner
- Number: Thousand_Separator
- Text Capital letters, password
- Date
- Civil registration number
- Municipality
- Code

For all types of fields, the following presentation options exist:
Left_Justified, Right_Justified.

The above table is filled in incompletely. Work is still carried out in order to discover excellent, suitable options for varying each type of field. For groups and lists, this attribute as no effect.

### 7.2.28 Column_number

The number of columns is dynamic.

The number of columns determines the number of columns into which a field may be divided.

Columns are useful when several fields are placed below each other and their field values belong to different columns, e.g. income column, expenditure column and sum column.

When a field is assigned a number in columns, a number of logic classifications of the field arise. The classifications are all of equal size. The attribute **Column_number** determines the logic classification, in which the value of the field is to be presented.

Fields placed below each other are thereby able to set their field column to the same value and consequently have the prefixes placed directly below each other, but may still place the field values in various columns.

The standard value is 1.

### 7.2.29 Column_number

The column number is dynamic.

The column number determines the column in which the value of the field is to be presented. The number of columns is determined by the attribute **Column_number**.

The standard value is 1.

### 7.2.30 Colour

The colour is dynamic.

The colour of the value of the field is determined by this attribute.

The standard value is black.

### 7.2.31 Font_face (attr)

The font face is dynamic.

The font face assumes one of the following values:
Normal, Bold, Italics, BoldItalics

The standard value is 'Normal'.

### 8. Database

The client's database is a collection of tables describing partly the profiles for the FLEX programmes and partly the information displayed in the programmes. In order to make the flexibility useful, an extra dimension has been added to the client's database, a user dimension. Each profile for a FLEX programme is consequently described for each set up user who needs to use the programme in question. The programmes may, thus, be saved with different user profiles.

## Claims

1. A method for presentation of information in a presentation system, said method comprising:
transferring data from a data processing system to the presentation system, said data being transferred as data strings comprising at least one data element, wherein each data element, comprising at least one identifier, unambiguously represents information,
identifying in the presentation system one or more presentation parameters or attributes by means of at least one identifier in a data element, and
controlling in the presentation system the presentation of the information of the data element by means of the identified presentation parameter(s) or attribute(s).

2. A method according to claim 1, wherein the presentation parameters or attributes are identified from a set of presentation parameters or attributes comprising at least one static and at least one dynamic presentation parameter or attribute.

3. A method according to claim 1 or claim 2, wherein the set of identifiers comprises one or more multi-component identifiers, each multi-component identifier comprising at least two components, one of which corresponds to a simple identifier.

4. A method according to claim 3, wherein the set of multi-component identifiers comprises one or more identifiers having at least three components and/or one or more identifiers having at least four components.

5. A method according to claim 3 or claim 4, wherein the components in the multi-component identifiers comprise one or more indexes.

6. A method according to any of the claims 3-5, wherein the components in the multi-component identifiers comprise one or more positions or position numbers.

7. A method according to any of the claims 3-6, wherein the components in the multi-component identifiers comprise a version.

8. A method according to any of the claims 1-7, wherein the presentation system corresponds to the client and the data processing system corresponds to the server in a client-server system.

9. A method according to any of the claims 1-8, wherein for at least one identifier, a plurality of attributes is identified.

10. A method according to claim 2 and any of the claims 3-9, wherein for at least one identifier, both a static and a dynamic attribute are identified.

11. A method according to any of the claims 1-10, wherein the identifiers comprise at least one component, and the attributes are identified by means of one or more components.

12. A method according to claim 2 and claim 11, wherein static and dynamic attributes, corresponding to the same identifier, are identified by means of one combination of components.

13. A method according to claim 2 and claim 11, wherein the static attributes are identified by means of a first component or a first combination of components.

14. A method according to claim 2 and claim 11 or claim 13, wherein the dynamic attributes are identified by means of a second component or a second combination of components.

15. A method according to claim 13 and claim 14, wherein the second combination of components is a combination of the first combination and a component not used in the first combination.

16. A method according to claim 13, wherein the first combination of components comprises simple identifier and version as components.

17. A method according to claim 14, wherein the second combination of components comprises simple identifier, version and position or position number as components.

18. A method according to any of the claims 1-17, wherein the connection between attributes and identifiers is indicated in one or more tables associated with the presentation system.

19. A method according to claim 2 and claim 18, wherein the tables comprise a first table indicating the connection between the static attributes and the identifiers, and a second table indicating the connection between the dynamic attributes and the identifiers.

20. A method according to claim 18 or claim 19, wherein one or more data elements in a data string transferred from the data processing system to the presentation system comprises attributes for the overwriting of attributes indicated in the table or tables associated with the presentation system.

21. A method according to claim 18 or claim 19, wherein the table or one of the tables is transferred from a first client database to a central database associated with the data processing system, and is transferred from there to a second client database for use by the second client.

22. A method according to claim 8, wherein the client and the server are implemented in the same data processing unit.

23. A method according to claim 8, wherein the client and the server are implemented in each of their respective data processing units.

24. A system for the transfer and presentation of information, said system comprising a presentation system and a data processing system, wherein
the presentation system and the data processing system are adapted to exchange data as data strings comprising at least one data element wherein each data element, comprising at least one identifier, unambiguously represents information,
the presentation system is adapted to identify one or more presentation parameters or attributes by means of at least one identifier in a data element, and
the presentation system is adapted to control the presentation of the information of the data element by means of the identified presentation parameters or attributes,
said presentation system being associated with one or more tables indicating the connection between the presentation parameters or the attributes and the identifiers.

25. A system according to claim 24, wherein
the presentation system is adapted to identify the presentation parameters or the attributes from a set of presentation parameters or attributes comprising at least one static and at least one dynamic presentation parameter or attribute, and
the tables comprise a first and a second table, said first table indicating the connection between the static attributes and the identifiers, and said second table indicating the connection between the dynamic attributes and the identifiers.

26. A system according to claim 24 or claim 25, wherein at least one identifier has a plurality of attributes corresponding thereto.

27. A method according to claim 25 or claim 26, wherein at least one identifier has both a static and a dynamic attribute corresponding thereto.

28. A system according to claim 25 and claim 26 or claim 27, wherein each identifier comprises at least two components, the first table indicates the static attributes as a function of a first component or a first combination of components, and the second table indicates the dynamic attributes as a function of a second component or a second combination of components.

29. A system according to claim 28, wherein the second combination of components is a combination of the first combination and a component not used in the first combination.

30. A system according to any of the claims 25-29, wherein the contents of the second table has been filled in by means of instructions from a user to the presentation system.

31. A system according to any of the claims 24-30, wherein the presentation system and the data processing system are a client and a server, respectively, in a client-server system.

32. A system according to claim 31, wherein the system further comprises a communication module constituting an interface between the client and the server.

33. A system according to any of the claims 24-32, wherein the data processing system is further adapted to be able to exchange data with a screen terminal, at which exchange formatted screen displays are transferred.

34. A system according to claim 31 or claim 32, wherein the client and the server are implemented on each of their respective work stations.

35. A system according to claim 31 or claim 32, wherein the client and the server are implemented on the same work station.

36. A system according to claim 35, wherein the client is further adapted to be able to exchange data with a screen terminal, at which exchange formatted screen displays are transferred.
